# EUROPEAN PATENT SPECIFICATION

(11) **EP 3 809 389 B1**
(45) Date of publication and mention of the grant of the patent: **31.07.2024**
(21) Application number: 19819741.0
(22) Date of filing: 14.06.2019
(51) Int. Cl.: G08G 1/005, A61H 3/06, G01C 21/26, G10K 15/04, H04S 1/00

(54) **NOTIFICATION DEVICE**
BENACHRICHTIGUNGSVORRICHTUNG
DISPOSITIF DE NOTIFICATION

(30) Priority: 14.06.2018 JP 2018113865
(43) Date of publication of application: 21.04.2021
(73) Proprietor: HONDA MOTOR CO., LTD., Minato-ku Tokyo 107-8556 (JP)
(72) Inventor: FUJIHARA Naoki, Wako-shi, Saitama 351-0193 (JP)
(74) Representative: Weickmann & Weickmann PartmbB
(86) International application number: PCT/JP2019/023706
(87) International publication number: WO 2019/240269

(56) References cited:
- EP-A1- 3 058 926
- WO-A1-03/049657
- WO-A1-2017/158418
- CN-A- 107 888 896
- JP-A- 2009 286 328
- JP-A- 2018 060 403
- JP-B2- 3 179 227
- US-A1- 2009 122 161
- YUHANG ZHAO ET AL: "Enabling People with Visual Impairments to Navigate Virtual Reality with a Haptic and Auditory Cane Simulation", HUMAN FACTORS IN COMPUTING SYSTEMS, ACM, 19 April 2018 (2018-04-19), pages 1 - 14, XP058402684, ISBN: 978-1-4503-5620-6, DOI: 10.1145/3173574.3173690

## Description

The present invention relates to a notification device, a notification method and program.

Priority is claimed on Japanese Patent Application No. 2018-113865, filed June 14, 2018.

### [Background Art]

Conventionally, technology for providing information about an obstacle to a person with impaired vision by outputting a sound for providing a notification representing that there is an obstacle nearby is known (JP 2003-79685 A). Also, technology for providing information about an obstacle to a person with impaired vision by generating a guidance sound on the basis of the distance to an obstacle and a head-related transfer function and outputting the generated guidance sound is known (WO2006/075606 A). Also, technology for providing information about an obstacle to a person with impaired vision by outputting digital sound data subjected to stereophonic processing on the basis of a position of the obstacle is known (JP . 2008-151766 A).

US 2009/122161 A1 discloses a notification device comprising a detector configured to detect a physical object around a moving person; a relative position acquirer configured to acquire a relative position with respect to the physical object and a sound synthesizing engine which models surface height or unevenness by sound tone varying through a range of one or more octaves based on a predetermined sound frequency scale suitable for a particular environment, wherein the notification device causes a generator to generate the sounds tone to notify the moving person of information about the physical object detected by the detector.

However, in the conventional technology, it may be difficult to accurately convey the position, the direction, the distance, and the like of an obstacle to a person to be guided.

The present invention has been made in consideration of the above-described circumstances and an objective of the present invention is to provide a notification device, a notification method, and a program capable of accurately conveying the position, the direction, the distance, and the like of an object to a person to be guided.

### [Solution to Problem]

The present invention provides a notification device according to claim 1, a notification method according to claim 13 and a program according to claim 14.

### [Advantageous Effects of Invention]

According to the present invention, the position, the direction, the distance, and the like of an object can be accurately conveyed to a person to be guided.

### [Brief Description of Drawings]

Fig. 1 is a diagram showing an example of an exterior of a sound guidance system 1 according to a first embodiment.
Fig. 2 is a diagram showing an example of a configuration of the sound guidance system 1 according to the first embodiment.
Fig. 3 is a diagram showing an example of the content of sound source information 202 according to the first embodiment.
Fig. 4 is a diagram showing an example of a recording space.
Fig. 5 is a diagram showing an example of an image IM1 captured by a camera 20.
Fig. 6 is a diagram showing an example of correspondence between a position P and sound information SD according to the first embodiment.
Fig. 7 is a flowchart showing an example of a process of a notification device 100 according to the first embodiment.
Fig. 8 is a diagram showing another example of correspondence between the position P and the sound information SD according to the first embodiment.
Fig. 9 is a diagram showing an example of a sound guidance system 1a according to a second embodiment.
Fig. 10 is a diagram showing an example of the content of the sound source information 202a according to the second embodiment.
Fig. 11 is a diagram showing an example of the content of danger level information 204.
Fig. 12 is a diagram showing an example of an image IM2 captured by the camera 20.
Fig. 13 is a diagram showing an example of correspondence between position P and sound information SD according to the second embodiment.
Fig. 14 is a flowchart showing an example of a process of a notification device 100a according to the second embodiment.
Fig. 15 is a diagram showing an example of a sound guidance system 1b according to a third embodiment.
Fig. 16 is a diagram showing an example of correspondence between a position P and sound information SD according to the third embodiment.
Fig. 17 is a diagram showing an example of an exterior of a sound guidance system 1c according to a fourth embodiment.
Fig. 18 is a diagram showing an example of a range within a recording space where sound source information 202 is recorded in a sound guidance system 1d according to a fifth embodiment.
Fig. 19 is a diagram showing an example of a range within the recording space where the sound source information 202 is recorded in the sound guidance system 1d according to the fifth embodiment.
Fig. 20 is a flowchart showing an example of a process of the sound guidance system 1d according to the fifth embodiment.
Fig. 21 is a diagram showing an example of an image IMI-F representing a feature point of an object OB1 extracted from an image 1M1 by a coordinate calculator 302.
Fig. 22 is a diagram showing an example in which a position of an upper end UE1 of the object OB1 is associated within the recording space.
Fig. 23 is a diagram showing an example in which a person to be guided is notified of the presence of an object according to sound source information 202 selected in the sound guidance system 1d according to the fifth embodiment.
Fig. 24 is a diagram showing an example of an image IM1-F2 representing a feature point of an object extracted by the coordinate calculator 302.
Fig. 25 is a diagram showing an example of an image 1M1-F3 representing a feature point of an object extracted by the coordinate calculator 302.
Fig. 26 is a diagram showing an example in which a person to be guided is notified of the presence of an object according to the sound source information 202 selected in the sound guidance system 1d according to the fifth embodiment.
Fig. 27 is a diagram showing an example of an image 1M1-F4 representing a feature point of an object extracted by the coordinate calculator 302.
Fig. 28 is a diagram showing an example in which a person to be guided is notified of the presence of an object according to the sound source information 202 selected in the sound guidance system 1d according to the fifth embodiment.

### [Description of Embodiments]

Hereinafter, embodiments of a notification device of the present invention will be described with reference to the drawings.

### <First embodiment>

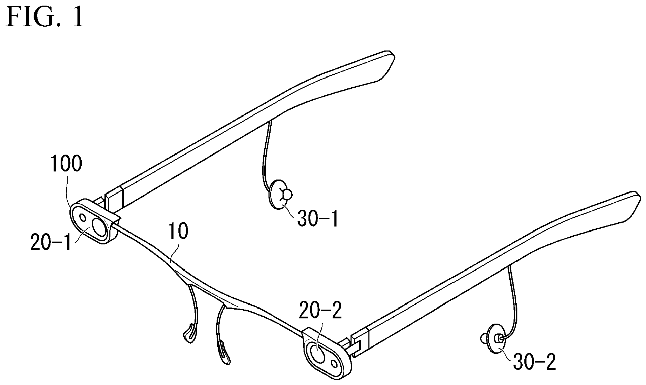

Fig. 1 is a diagram showing an example of an exterior of a sound guidance system 1 according to a first embodiment. The sound guidance system 1 is, for example, a system that notifies a person to be guided such as a person with impaired vision of a direction in which the person to be guided is guided by sound. As shown in Fig. 1, the sound guidance system 1 is a wearable device including a base 10, a camera 20, a speaker 30, and a notification device 100.

The base 10 supports each part provided in the sound guidance system 1. The base 10 has, for example, a shape similar to a frame of eyeglasses, and is worn on the face of the person to be guided by the sound guidance system 1. Also, the base 10 may support a pair of left and right lenses in addition to parts provided in the sound guidance system 1.

The camera 20 is, for example, a digital camera that uses a solid-state image sensor such as a charge coupled device (CCD) or a complementary metal oxide semiconductor (CMOS). As shown in Fig. 1, the camera 20 is a stereo camera including a right camera 20-1 and a left camera 20-2. The right camera 20-1 and the left camera 20-2 are attached to any locations on the base 10. The camera 20 is an example of a "detector."

The speaker 30 operates under control of the notification device 100 and outputs a sound. As shown in Fig. 1, the speaker 30 includes a right speaker 30-1 and a left speaker 30-2 and outputs a sound according to stereo reproduction. The right speaker 30-1 and the left speaker 30-2 are attached to any locations on the base 10. The speaker 30 is an example of a "generator."

Specifically, the right camera 20-1 and the right speaker 30-1 are provided on the right side of the person to be guided when the base 10 is worn by the person to be guided and the left camera 20-2 and the left speaker 30-2 are provided on the left side of the person to be guided when the base 10 is worn by the person to be guided. Also, the right camera 20-1 and the left camera 20-2 are provided on the front of the base 10 so that a view in front of the person to be guided is imaged. Also, the right speaker 30-1 is provided at a position where the output sound can be easily heard by the right ear of the person to be guided among positions supported by a temple on the right side of the base 10 and the left speaker 30-2 is provided at a position where the output sound can be easily heard by the left ear of the person to be guided among positions supported by a temple on the left side of the base 10.

Also, the right speaker 30-1 and the left speaker 30-2 may have shapes similar to those of earphones which are inserted into and used in the ears of the person to be guided.

The notification device 100 is attached to any location on the base 10. In the example shown in Fig. 1, the notification device 100 is attached so that the notification device 100 is supported by the temple on the right side of the base 10. Details of the notification device 100 will be described below.

### [About notification device 100]

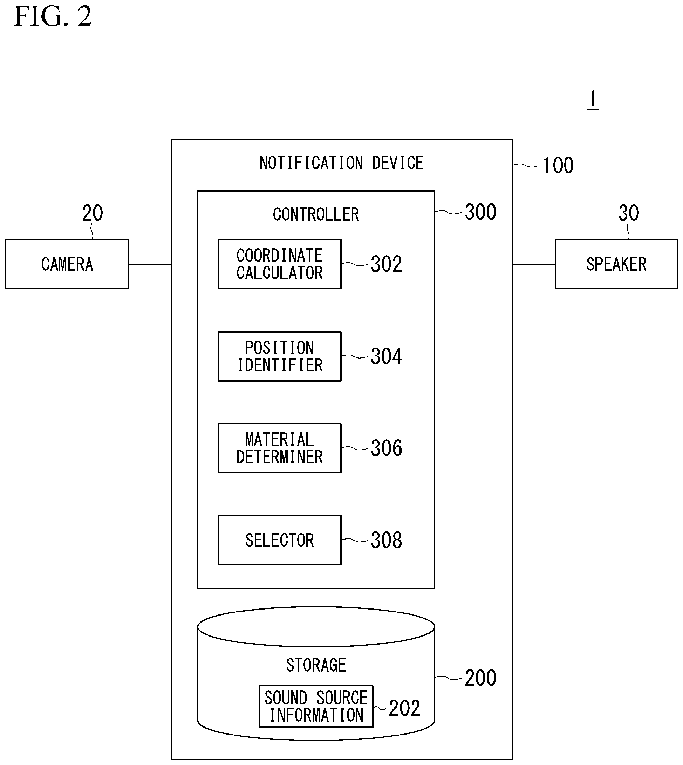

Fig. 2 is a diagram showing an example of a configuration of the sound guidance system 1 according to the first embodiment. The notification device 100 includes, for example, a storage 200 and a controller 300.

The storage 200 is implemented by, for example, an HDD, a flash memory, an electrically erasable programmable read only memory (EEPROM), a read only memory (ROM), a random access memory (ROM), or the like. For example, the storage 200 stores a program read and executed by a hardware processor. Also, for example, the sound source information 202 is pre-stored in the storage 200.

### [About sound source information 202]

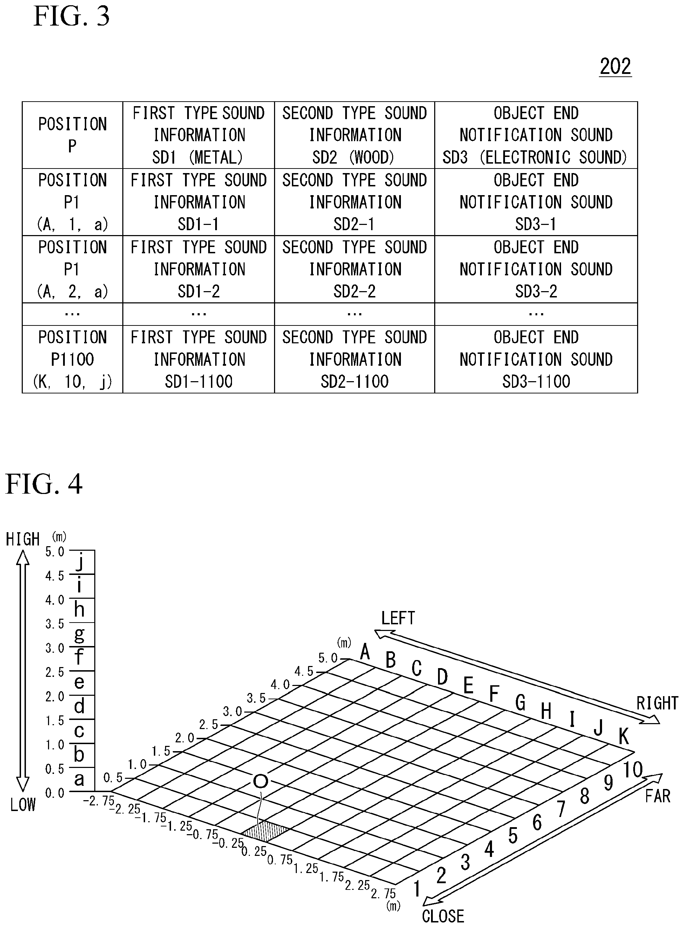

Fig. 3 is a diagram showing an example of content of the sound source information 202 according to the first embodiment. The sound source information 202 is information in which sound information SD representing each sound and a position P where the sound has been generated in a recording space for acquiring (recording) the sound are mutually associated. In the example shown in Fig. 3, the sound source information 202 is information in which first type sound information SD1 representing a tapping sound of metal, second type sound information SD2 representing a tapping sound of wood, and an object end notification sound SD3 representing an electronic sound are mutually associated with positions P in the recording space where the sounds have been generated. In the present embodiment, all of the sound information SD is information representing sounds recorded at the origin O of the recording space.

Fig. 4 is a diagram showing an example of the recording space. For example, the recording space is a rectangular space having a width of -2.75 [m] in the left direction to 2.75 [m] in the right direction from the origin O, a depth of 5.0 [m] in the forward direction from the origin O, and a height of 5.0 [m] in the upward direction from the origin O. In the following description, the width of -2.75 to 2.75 [m] is divided in units of 0.5 [m] and 11 division areas are referred to as columns A to K from the left. Also, a depth of 0 to 5.0 [m] is divided in units of 0.5 [m] and 10 division areas are referred to as rows 1 to 10 from the front. Also, a height of 0 to 5.0 [m] is divided in units of 0.5 [m] units and 10 division areas are referred to as layers a to j from the bottom. For example, the position P of the recording space is represented as in a position P(A to K, 1 to 10, a to j) according to the area of the width, the height, and the depth and there are 1100 positions P in the recording space.

Also, dimensions of the recording space are examples and the present invention is not limited thereto. Also, the width, the depth, and the height of the recording space may be divided according to a length other than 0.5 [m] described above.

Returning to Fig. 3, the first type sound information SD1 includes first type sound information SD1-1 to SD1-1100 acquired by tapping metal at positions P in the recording space. Also, the second type sound information SD2 includes second type sound information SD2-1 to SD2-1100 acquired by tapping wood at the positions P of the recording space. Also, the object end notification sound SD3 includes object end notification sounds SD3-1 to SD3-1100 acquired by emitting electronic sounds at the positions P in the recording space. Therefore, the sound information SD is information representing a timbre that reminds of a material which generates each sound.

Here, all of the volumes of the sounds emitted at each position P are the same. Therefore, the volume of the sound represented by the sound information SD increases as the sound is close to the sound of the sound information SD associated with the position P of column F, row 1, and layer a and decreases as the sound is close to the sound of the sound information SD associated with the position P of column A, column K, row 10, and layer j.

Also, the first type sound information SD1 and the second type sound information SD2 are examples of the sound information SD and the present invention is not limited thereto. The sound information SD may include, for example, information of sounds acquired by tapping materials (for example, plastic and the like) other than metal or wood at each position P of the recording space.

### [About controller 300]

Returning to Fig. 2, the controller 300 includes, for example, a coordinate calculator 302, a position identifier 304, a material determiner 306, and a selector 308. Each of the components included in the controller 300 is implemented, for example, by a hardware processor such as a central processing unit (CPU) executing a program (software) stored in the storage 200. Also, some or all of the components may be implemented by hardware (a circuit unit including circuitry) such as a large scale integration (LSI) circuit, an application specific integrated circuit (ASIC), a field-programmable gate array (FPGA), and a graphics processing unit (GPU) or may be implemented by software and hardware in cooperation.

The coordinate calculator 302 extracts a feature point of an object near the person to be guided on the basis of an image captured by the camera 20 and calculates coordinates CT of the extracted feature point. For example, the coordinate calculator 302 calculates the coordinates CT of the feature point of the object for use in guiding the person to be guided designated as a calculation target among objects in a real space corresponding to the recording space when a position of the person to be guided is designated as the origin O. Here, it is preferable that the object for use in guiding the person to be guided be an object having continuity in a direction in which the person to be guided is guided. Objects having continuity in a direction in which the person to be guided is guided are, for example, guardrails, fences, curbs that separate sidewalks and roadways, and the like. For example, the coordinates CT are calculated as coordinates CT(W, D, H) according to a first distance W in the left-right direction from the person to be guided to the feature point of the object, a second distance D in the forward direction from the person to be guided to the feature point of the object, and a third distance H in the height direction from the person to be guided to the feature point of the object.

For example, the position identifier 304 identifies the position of the object. Specifically, when the position of the person to be guided is designated as the origin O and the direction in which the person to be guided is guided is designated as a direction of rows 1 to 10, the position identifier 304 identifies a position P of the recording space corresponding to coordinates CT calculated by the coordinate calculator 302. The coordinate calculator 302 and the position identifier 304 are examples of a "relative position acquirer."

The material determiner 306 determines a material of the object near the person to be guided on the basis of the image captured by the camera 20. For example, the material determiner 306 determines a material of an object in a real space that matches the recording space when the position of the person to be guided is designated as the origin O among objects shown in the image captured by the camera 20.

Also, the material determiner 306 may be configured to determine the material of the object on the basis of a ratio of light received by a light receiver to light (for example, near infrared rays) output by a light projector to the object. In this case, the sound guidance system 1 includes the light projector and the light receiver.

The selector 308 selects sound information SD corresponding to the position P as sound information SD corresponding to the material from the sound information SD included in the sound source information 202 on the basis of the position P of the object identified by the position identifier 304 and the material of the object determined by the material determiner 306. Also, the selector 308 outputs a sound of the selected sound information SD through the speaker 30.

### [Example of selected sound information SD]

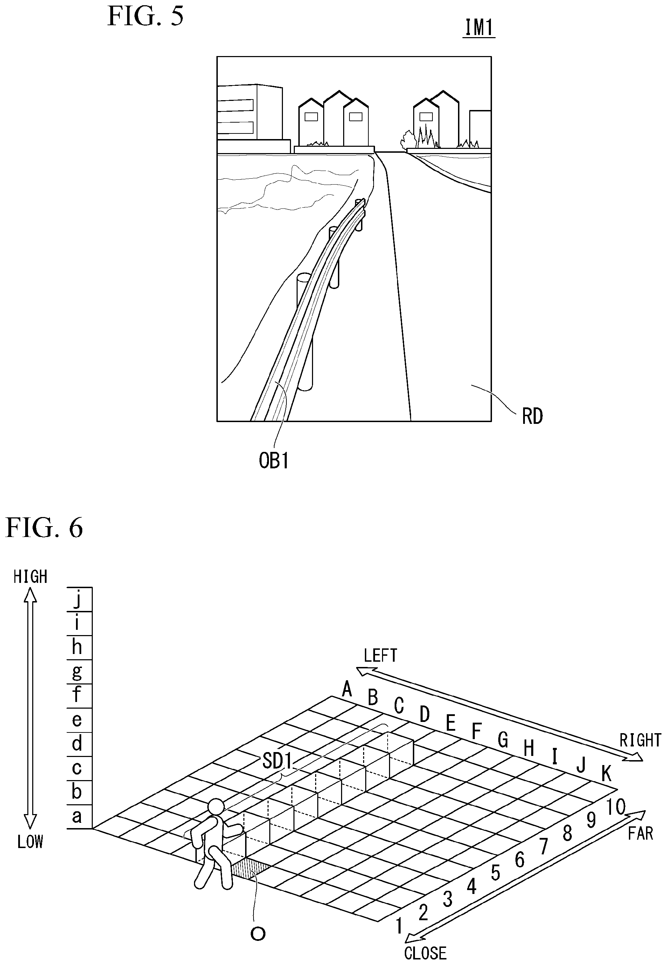

Fig. 5 is a diagram showing an example of an image IM1 captured by the camera 20. In the image IM1, a road RD on which the person to be guided walks and a guardrail are imaged. The coordinate calculator 302 recognizes the guardrail as an object OB1 near the person to be guided and calculates coordinates CT of feature points of the guardrail.

Fig. 6 is a diagram showing an example of correspondence between the position P and the sound information SD according to the first embodiment. The position identifier 304 identifies that the object OB1 represented by a plurality of coordinates CT calculated by the coordinate calculator 302 is an object OB1 having continuity at positions P(E, 1, a) to P(E, 8, a). Also, the material determiner 306 determines that the material of the object OB1 is metal. Accordingly, the selector 308 selects a plurality of pieces of first type sound information SD1 associated with the positions P(E, 1, a) to P(E, 8, a) from the sound source information 202 and sequentially outputs the plurality of pieces of first type sound information SD1 that have been selected through the speaker 30. For example, the speaker 30 sequentially outputs the first type sound information SD1 from the first type sound information SD1 associated with the position P closet to the person to be guided among the plurality of pieces of first type sound information SD1 that have been selected.

Here, in the first type sound information SD1 of the position P(E, 1, a) and the first type sound information SD1 of the position P(E, 8, a), the volume of the sound of the latter first type sound information SD1 is lower. Therefore, the person to be guided can recognize a position of the object OB1, a material of the object OB1, the distance to the object OB1, and the guidance direction according to the sound of the first type sound information SD1 sequentially output from the speaker 30.

Also, even if the object has continuity in the guidance direction with respect to the person to be guided, it may not preferable to use the object for guiding the person to be guided when the object (for example, eaves of a shop, a street tree, or the like) is at an excessively high position (for example, layer g (3.0 [m]) or more). Thus, the selector 308 may not select the sound information SD associated with the position P having a predetermined height or more (for example, layer g or more) among the positions P identified by the position identifier 304. The predetermined height is an example of a "second threshold value."

### [Processing flow]

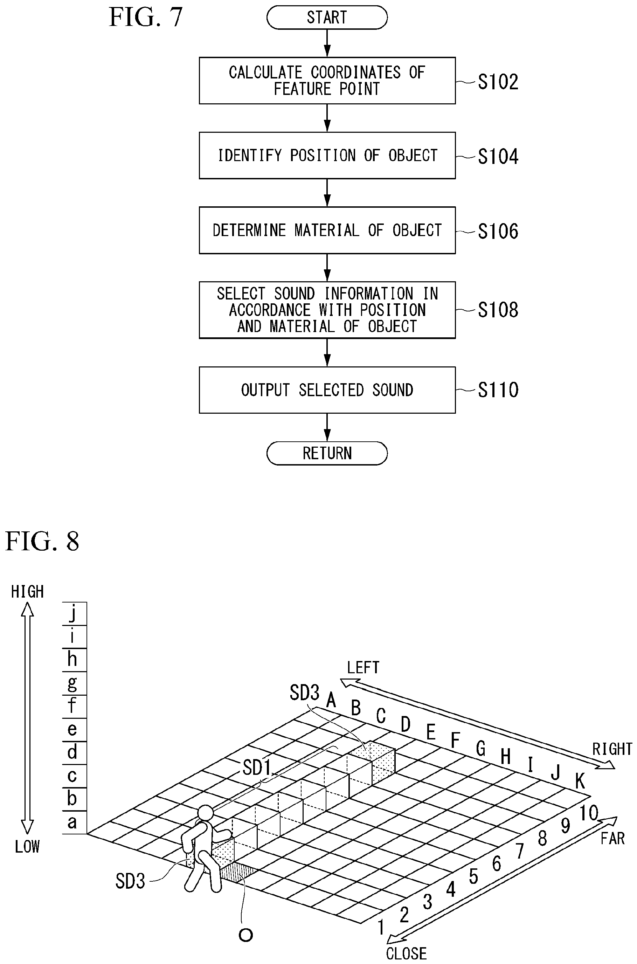

Fig. 7 is a flowchart showing an example of a process of the notification device 100 according to the first embodiment. The process of the flowchart shown in Fig. 7 is iteratively executed at predetermined time intervals. The coordinate calculator 302 calculates coordinates CT of a feature point of an object near the person to be guided on the basis of an image captured by the camera 20 (step S102). Next, the position identifier 304 identifies a position P of the coordinates CT calculated by the coordinate calculator 302 (step S104). Next, the material determiner 306 determines a material of the object on the basis of the image captured by the camera 20 (step S106). Next, the selector 308 selects sound information SD from the sound source information 202 in accordance with the position P identified by the position identifier 304 and the material of the object determined by the material determiner 306 (step S108). Next, the selector 308 causes the speaker 30 to output the selected sound information SD (step S1 10).

### [Summary of first embodiment]

The notification device 100 of the present embodiment includes: an imager (the camera 20 in the present example) configured to perform an imaging process; the coordinate calculator 302 configured to calculate coordinates CT of a feature point of an object from an image captured by the camera 20; the position identifier 304 configured to identify a position P of the object on the basis of the coordinates CT of the feature point; and the selector 308 configured to select sound information SD to be output to a generator from a plurality of pieces of sound information SD so that a volume changes in accordance with a direction in which a person to be guided is guided and the distance to the object on the basis of the plurality of pieces of sound information SD in which sounds emitted from a plurality of positions P of a space where the sounds are recorded are recorded for each position P and the position P of the object. The generator (the speaker 30 in the present example) configured to generate a sound represented by the sound information SD selected by the selector 308 outputs the sound, so that it is possible to accurately convey the position, the direction, the distance, and the like of the object to the person to be guided.

Also, in the notification device 100 of the present embodiment, the sound information SD includes sound information SD (the first type sound information SD1 and the second type sound information SD2 in the present example) representing a timbre that reminds of a material of the object (metal and wood in the present example) and it is possible to convey the position, the direction, the distance, and the like of the object to the person to be guided and to remind the person of a type of the object.

### [About object end notification sound SD3]

Also, the selector 308 may select sound information SD other than the sound information SD based on the material of the object determined by the material determiner 306. Fig. 8 is a diagram showing another example of correspondence between the position P and the sound information SD according to the first embodiment. For example, the selector 308 selects the object end notification sound SD3 associated with positions P(E, 1, a) and P(E, 8, a) which are positions P of the ends of the object OB1 identified by the position identifier 304 so that the person to be guided is notified of ends of a guardrail. Thereby, the notification device 100 can accurately convey positions, directions, distances, and the like of the ends of the object for use in guiding the person to be guided to the person to be guided.

### [About reverberation of sound represented by sound information SD]

Also, the sound information SD may be information representing a sound recorded in a recording space where reverberation occurs. In this case, the person to be guided can more accurately ascertain the position, the direction, the distance, and the like of an object according to the reverberation of the sound information SD output by the speaker 30.

### <Second embodiment>

Hereinafter, a second embodiment of the present invention will be described. In the first embodiment, a case in which sound information SD corresponding to an object is fixedly sent to a person to be guided has been described. In the second embodiment, a case in which an object to which the person to be guided should pay particular attention among the objects is determined and the person to be guided is notified of the object will be described. Also, components similar to those in the above-described embodiment are denoted by the same reference signs and a description thereof will be omitted.

### [About controller 300a]

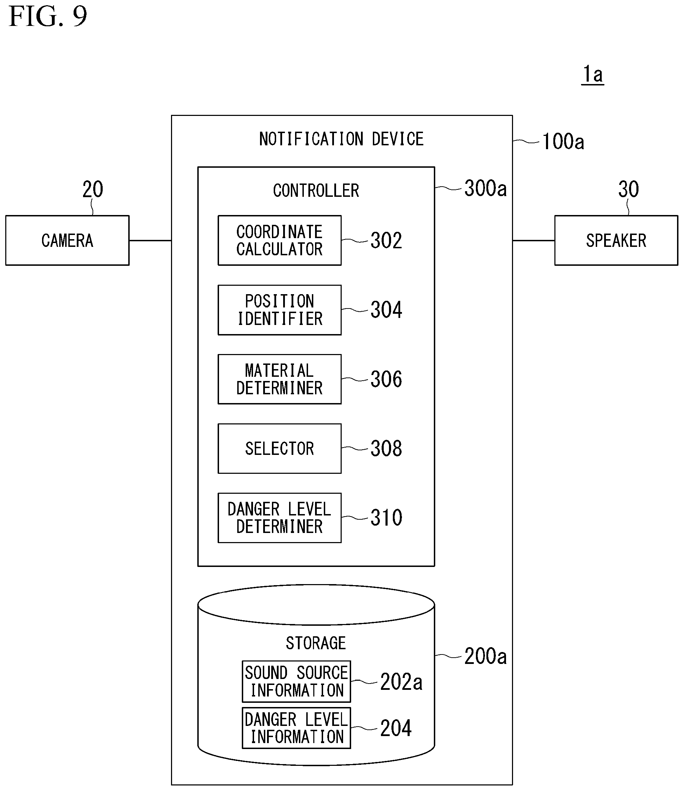

Fig. 9 is a diagram showing an example of a sound guidance system 1a according to the second embodiment. The sound guidance system 1a includes a notification device 100a in place of (or in addition to) the notification device 100 provided in the sound guidance system 1. The notification device 100a includes a storage 200a and a controller 300a.

The storage 200a pre-stores sound source information 202a and danger level information 204.

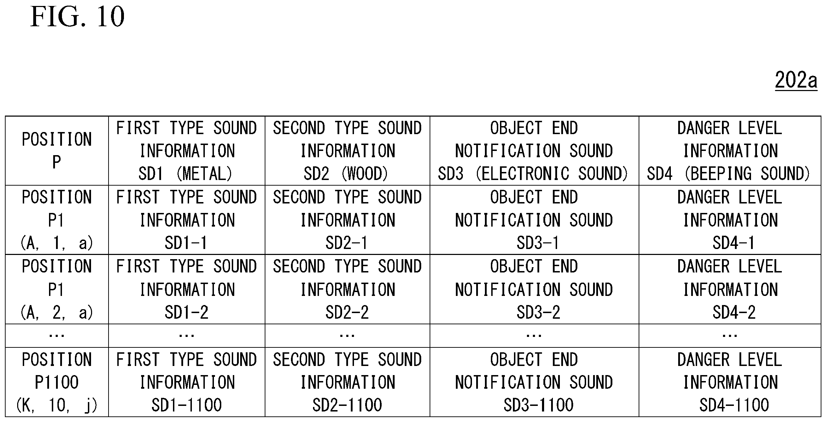

Fig. 10 is a diagram showing an example of content of the sound source information 202a according to the second embodiment. In addition to the information included in the sound source information 202, the sound source information 202a further includes information in which danger sound information SD4 representing a sound for catching someone's attention (for example, a beeping sound) is mutually associated with a position P in a recording space where the sound is generated.

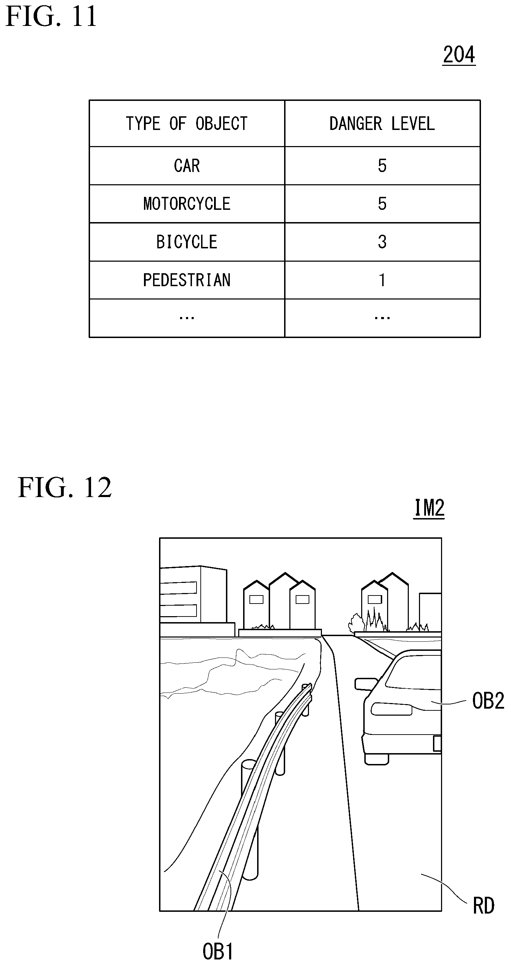

Fig. 11 is a diagram showing an example of content of the danger level information 204. The danger level information 204 is information in which a type of object and a danger level of the object are mutually associated. The danger level of the object is, for example, a value assigned on the basis of a level of harm that would be caused when the object comes into contact with the person to be guided. When the harm is greater, the danger level of a larger value is assigned to the object. In the danger level information 204 shown in Fig. 11, the danger level of any value of "1" to "5" is assigned to the object.

Returning to Fig. 9, the controller 300a includes, for example, a coordinate calculator 302, a position identifier 304, a material determiner 306, a selector 308, and a danger level determiner 310.

The danger level determiner 310 determines a type of object on the basis of an image captured by the camera 20. Also, the danger level determiner 310 determines the danger level of the object on the basis of the determined type of object and the danger level information 204.

The selector 308 of the present embodiment further selects the sound information SD on the basis of the danger level of the object determined by the danger level determiner 310. For example, when the danger level of the object whose position P is determined by the position identifier 304 is greater than or equal to a predetermined threshold value (for example, danger level "4"), the selector 308 selects the danger sound information SD4 associated with the position P of the object. The predetermined threshold value is an example of a "first threshold value."

Here, when a plurality of pieces of sound information SD of objects other than the object for use in guiding the person to be guided (i.e., an object whose danger level is greater than or equal to the predetermined threshold value) are output according to the position P of the object, a process of outputting the plurality of pieces of sound information SD may interfere with guidance for the person to be guided. Thus, the selector 308 selects only the danger sound information SD4 associated with the position P closest to the person to be guided among the positions P of the objects whose danger level is determined to be greater than or equal to the predetermined threshold value and outputs the selected danger sound information SD through the speaker 30.

### [Example of selected sound information SD]

Fig. 12 is a diagram showing an example of an image IM2 captured by the camera 20. In the image IM2, a road RD on which the person to be guided walks, a guardrail (an object OBI), and a vehicle (an object OB2) approaching the person to be guided are imaged. On the basis of the image IM2, the danger level determiner 310 determines that the object OB2 is an object whose danger level is greater than or equal to the predetermined threshold value.

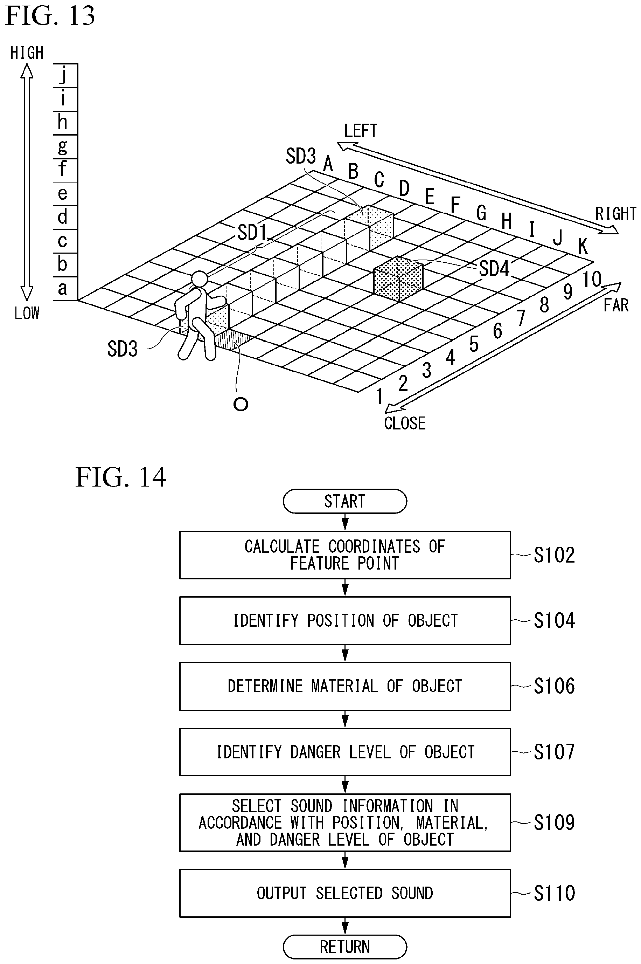

Fig. 13 is a diagram showing an example of correspondence between the position P and the sound information SD according to the second embodiment. The position identifier 304 identifies a plurality of positions P of the object OB2 determined to have a high danger level by the danger level determiner 310 and identifies that the position P closest to the person to be guided (the origin O) among the plurality of positions P that haven been identified is a position P(H, 6, a). Accordingly, the selector 308 selects the danger sound information SD4 associated with the position P(H, 6, a) from the sound source information 202 and outputs the selected danger sound information SD4 through the speaker 30. Thereby, the person to be guided can recognize the position of the object OB2 having a high danger level and the object OB3 according to a sound of the danger sound information SD4 output from the speaker 30.

### [Processing flow]

Fig. 14 is a flowchart showing an example of a process of the notification device 100a according to the second embodiment. The process of the flowchart shown in Fig. 14 is iteratively executed at predetermined time intervals. Also, the processing of steps shown in Fig. 14 which is the same as that of steps shown in Fig. 7 is denoted by the same reference signs and a description thereof will be omitted.

In the second embodiment, the notification device 100a executes step S107 after step S106. The danger level determiner 310 determines a danger level of an object (step S107). Also, the selector 308 of the second embodiment selects sound information SD from the sound source information 202 in accordance with a position P of the object identified by the position identifier 304, the material of the object determined by the material determiner 306, and the danger level of the object determined by the danger level determiner 310 (step S109).

### [Summary of second embodiment]

As described above, the notification device 100a of the present embodiment includes a danger level determiner 310 configured to determine a danger level of an object identified by the position identifier 304 on the basis of the danger level information 204 in which the object and the danger level of the object are mutually associated. When the danger level of the object is greater than or equal to the predetermined threshold value, the selector 308 can select sound information SD (the danger sound information SD4 in the present example) to be output and allow the person to be guided to pay attention to the position, the direction, the distance, and the like of an object having a high danger level.

### <Third embodiment>

Hereinafter, a third embodiment of the present invention will be described. In the third embodiment, a case in which a position of an object is further identified on the basis of position information representing the position of the object in addition to an image captured by the camera 20 will be described. Components similar to those in the above-described embodiment are denoted by the same reference signs and a description thereof will be omitted.

### [About sound guidance system 1b]

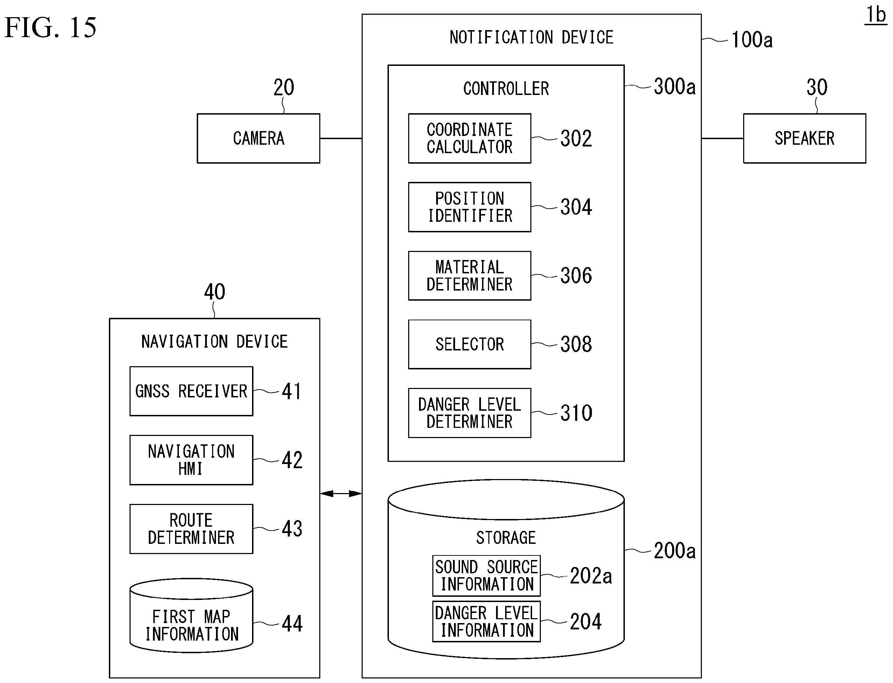

Fig. 15 is a diagram showing an example of a sound guidance system lb according to the third embodiment. The sound guidance system 1b further includes a navigation device 40 in addition to the components provided in the sound guidance system 1 or the sound guidance system 1a.

The navigation device 40 includes, for example, a global navigation satellite system (GNSS) receiver 41, a navigation human machine interface (HMI) 42, and a route determiner 43. The navigation device 40 retains first map information 44 in a storage device such as a hard disk drive (HDD) or a flash memory.

The GNSS receiver 41 identifies a current position of the person to be guided on the basis of a signal received from a GNSS satellite.

The navigation HMI 42 includes a display device, a speaker, a touch panel, keys, and the like. A destination is input to the navigation HMI 42 by the person to be guided. When the person to be guided has another HMI, the navigation HMI 42 may be configured to share some or all of the functions with the other HMI device. Information representing the destination is output to the notification device 100a.

For example, the route determiner 43 determines a route from the position of the person to be guided (or any input position) identified by the GNSS receiver 41 to the destination input to the navigation HMI 42 with reference to the first map information 44. For example, the first map information 44 is information in which a road shape is expressed by a link representing a road and nodes connected by the link. The first map information 44 may include road curvature, point of interest (POI) information, and the like.

For example, the navigation device 40 may be implemented by a function of a terminal device such as a smartphone or a tablet terminal owned by the person to be guided. The navigation device 40 may transmit the current position and the destination to a navigation server via a communication device (not shown) and acquire a route equivalent to the route on the map from the navigation server.

The position identifier 304 of the present embodiment acquires the current position of the person to be guided acquired by the GNSS receiver 41 and identifies the current position (the origin O) of the person to be guided in the first map information 44. Also, the position identifier 304 identifies a position of an object in a real space that matches a recording space in the first map information 44 on the basis of the current position (the origin O) of the person to be guided in the first map information 44. Here, the first map information 44 may be associated with information about a shape of a building, a shape of a road, or the like. In this case, the position identifier 304 can further more accurately identify the position P of the object on the basis of coordinates CT calculated by the coordinate calculator 302 and the first map information 44.

### [Determination of danger level based on the first map information 44]

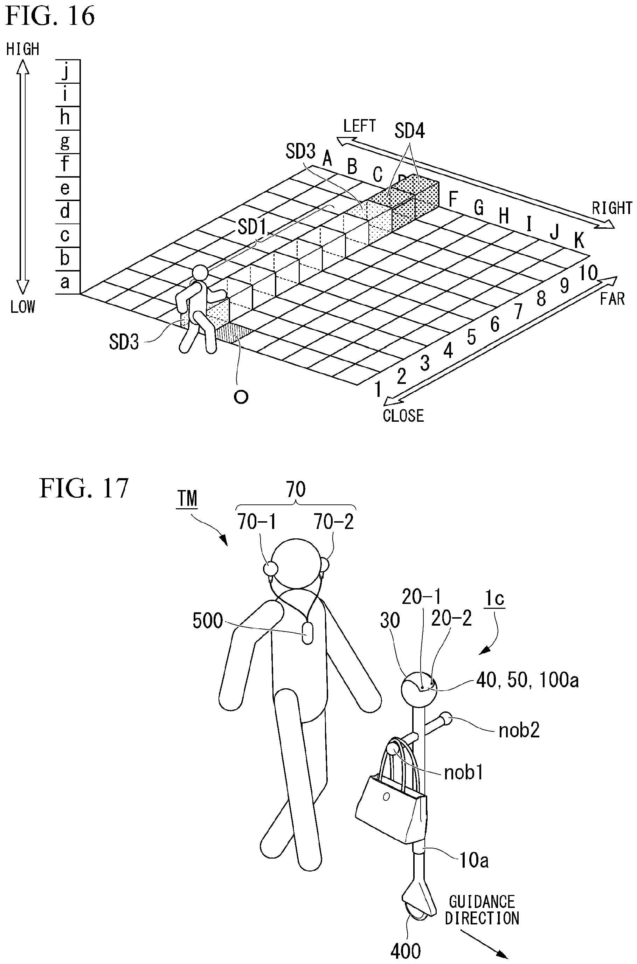

Also, the first map information 44 may be associated with a name of a building, a name of a facility, and the like as well as information about a shape of a building and a shape of a road. Here, if the name of the building or the name of the facility is "∘∘ parking lot" or "∘∘ commercial facility," many vehicles or people may enter or leave the building or facility with that name and it is preferable for the person to be guided to pay attention to the entrance/exit. Fig. 16 is a diagram showing an example of correspondence between a position P and sound information SD according to the third embodiment. As shown in Fig. 16, the selector 308 selects danger sound information SD4 associated with positions P (positions P(E, 9, a) to P(E, 10, a) shown in Fig. 16) where the person to be guided should pay attention on the basis of the current position (the origin O) of the person to be guided in the first map information 44 and the first map information 44. Thereby, the notification device 100a of the third embodiment can allow the person to be guided to pay attention to a position where the danger level is high, the direction of the position, the distance to the position, and the like.

### <Fourth embodiment>

Hereinafter, a fourth embodiment of the present invention will be described. In the above-described embodiment, a case in which the sound guidance system is a wearable device has been described. In the fourth embodiment, a case in which the person to be guided is guided by a sound guidance system 1c mounted in an autonomously traveling vehicle will be described. Also, components similar to those in the above-described embodiment are denoted by the same reference signs and a description thereof will be omitted.

Fig. 17 is a diagram showing an example of an exterior of the sound guidance system 1c according to the fourth embodiment. As shown in Fig. 17, the sound guidance system 1c includes a base 10a, cameras 20 (a right camera 20-1 and a left camera 20-2), a speaker 30, a navigation device 40, a communication device 50, a notification device 100a, and a vehicle 400.

In the present embodiment, the speaker 30 may be a speaker in which the right speaker 30-1 and the left speaker 30-2 are integrally formed. The speaker 30 outputs a sound of sound information SD in a direction in which the person to be guided is present (a rearward direction in the present example).

For example, the base 10a has a rod shape and supports each part provided in the sound guidance system 1c. Also, protrusions nob1 to nob2 are provided on the base 10a so that luggage or the like of the person to be guided can be hung.

For example, the vehicle 400 is equipped with each part provided in the sound guidance system 1c and travels in front of the person to be guided. The vehicle 400 is driven by an electric motor and operates using electric power with which a secondary battery or a fuel cell is discharged. The vehicle 400 is, for example, an autonomous stable unicycle. The vehicle 400 travels on the basis of control of a control device (not shown) mounted in the vehicle 400. Also, the vehicle 400 may travel on the basis of information representing a direction supplied from the notification devices 100 to 100a (for example, information representing the position P).

### [About correction of position P]

Here, in the sound guidance system 1c, it is difficult to use the position of the sound guidance system 1c as the origin O because the person to be guided is at a position at a predetermined distance (for example, several meters [m]) from the sound guidance system 1c. Therefore, the sound guidance system 1c is required to correct the position P on the basis of a difference between the position of the person to be guided and the position of the sound guidance system 1c (the speaker 30).

In this case, for example, the sound guidance system 1c includes a rear camera (not shown) that images the person to be guided behind the sound guidance system 1c in addition to the camera 20 that images a view in a guidance direction. Also, the position identifier 304 of the present embodiment identifies the position of the person to be guided on the basis of the image captured by the rear camera and corrects the origin O on the basis of a difference between the position of the sound guidance system 1c and the position of the person to be guided. The position identifier 304 identifies the position P of the object on the basis of the corrected origin O.

Thereby, the sound guidance system 1c can accurately convey the position, the direction, the distance, and the like of an object to the person to be guided by traveling ahead of the person to be guided even if the person to be guided does not wear the wearable device and notifying the person of the sound information SD through the speaker 30.

### [About terminal device TM]

Also, although the sound guidance system 1c normally outputs a sound of the sound information SD through the speaker 30 in the present embodiment, information representing selected sound information SD is transmitted to a terminal device TM according to a place where there is a lot of noise in the surroundings or a place where it is not preferable to make a sound. In this case, the sound guidance system 1c and the wireless earphone device 500 are connected by, for example, a network so that communication is possible. The network includes some or all of a wide area network (WAN), a local area network (LAN), the Internet, a dedicated circuit, a radio base station, a provider, and the like.

The person to be guided has the terminal device TM capable of communicating with the sound guidance system 1c. The terminal device TM includes a speaker 70 and a wireless earphone device 500.

The speaker 30 operates under the control of the wireless earphone device 500 and outputs a sound. As shown in Fig. 17, the speaker 70 includes a right speaker 70-1 and a left speaker 70-2 and outputs a sound through stereo reproduction. The speaker 30 is, for example, an earphone that is inserted into and used in the ear of the person to be guided.

The wireless earphone device 500 includes a communication device (not shown), receives the sound information SD from the sound guidance system 1c and outputs the sound represented by the received sound information SD through the speaker 70. Thereby, the sound guidance system 1c can also accurately convey the position, the direction, the distance, and the like of the object to the person to be guided in a place where there is a lot of noise in the surroundings or where it is not preferable to make a sound.

### [About intention to start]

Also, the sound guidance systems 1 to 1c may be configured to include a microphone, recognize the voice such as "guidance start" emitted by the person to be guided, the sound of clapping his or her hands, or the like as the intention to start using the sound guidance systems 1 to 1c, and start guidance with respect to the person to be guided. Also, the sound guidance systems 1 to 1c are configured to recognize a gesture such as waving a hand imaged by the camera 20 as the intention to start using the sound guidance systems 1 to 1c and to start guidance with respect to the person to be guided.

### [About position of origin O]

Also, although a case in which the origin O is set at the end of the recording space (a position P(F, 1, a) in the above-described example) and a sound according to the position P of the object in front of the person to be guided (i.e., a direction of rows 1 to 10) is output has been described in the sound guidance systems 1 to 1c of the above-described embodiment, the present invention is not limited thereto. A configuration in which the origin O is set in the center of the recording space and a sound according to the position P of the object near the person to be guided (i.e., in a range including an area in a rearward direction with respect to the person to be guided) is output may be adopted.

### <Fifth embodiment>

Hereinafter, a fifth embodiment of the present invention will be described. In the above-described first to fourth embodiments, the configurations and operations have been described on the basis of the basic concept for implementing the sound guidance systems 1 to 1c. In the fifth embodiment, a more specific example for implementing the sound guidance systems 1 to 1c will be described. Also, components similar to those in the above-described embodiment are denoted by the same reference signs and a description thereof will be omitted.

In the fifth embodiment, a specific example of implementing the sound guidance system 1 will be described. Here, in the sound guidance system 1 (hereinafter referred to as a "sound guidance system 1d") implemented in the fifth embodiment, it is assumed that only metal is detected as an object to be ascertained by the person to be guided for ease of description. That is, in the sound guidance system 1d of the fifth embodiment, it is assumed that only sound information SD (for example, the first type sound information SD1 shown in Fig. 3) representing the tapping sound of metal is pre-stored in the storage 200 as the sound source information 202.

### [About sound source information 202]

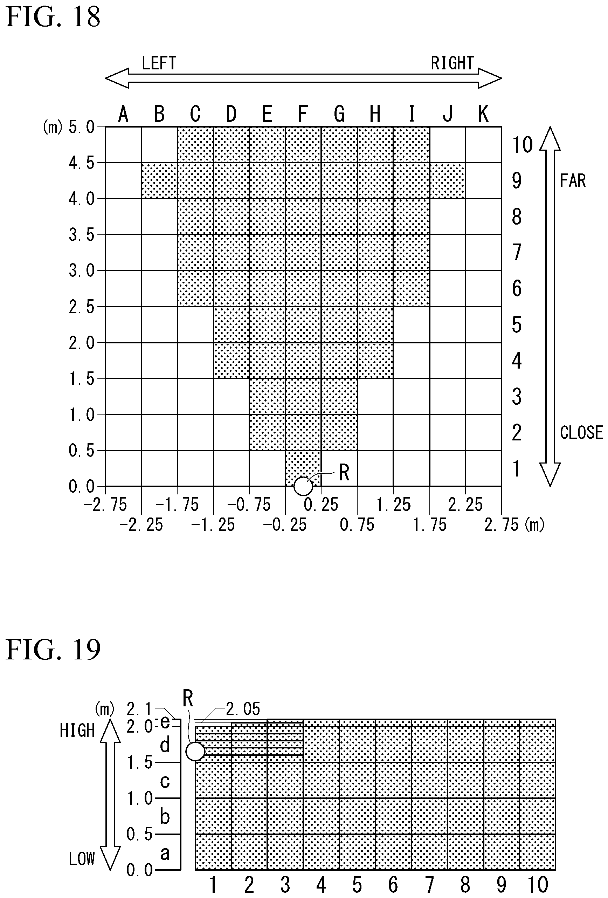

Figs. 18 and 19 are diagrams showing an example of a range within the recording space where the sound source information 202 is recorded in the sound guidance system 1d according to the fifth embodiment. As shown in Figs. 18 and 19, an example of a range of the first type sound information SD1 that is recorded in advance and stored as the sound source information 202 in the storage 200 provided in the sound guidance system 1d is shown in association with the recording space shown in Fig. 4. Fig. 18 shows a range of a horizontal direction in which the first type sound information SD1 is recorded. The range of a vertical direction in which the first type sound information SD1 is recorded is shown in Fig. 19.

The sound guidance system 1d is worn on the face of the person to be guided and cameras 20 (a right camera 20-1 and a left camera 20-2) image a predetermined range in a forward direction. Thus, the range of the horizontal direction in the recording space for recording the sound representing the object to be ascertained by the person to be guided is at least a range including an imaging range of the camera 20. In Fig. 18, for example, an example in which, when it is assumed that the imaging range of the camera 20 is a range of a substantially triangular shape, a range of a substantially triangular shape in front of a recording point R is a range of a horizontal direction in which the first type sound information SD1 is recorded is shown. Also, the range of the horizontal direction in which the first type sound information SD1 shown in Fig. 18 is recorded is an example and may differ according to the imaging range of the camera 20.

Also, the sound guidance system 1d notifies the person to be guided of the presence of an object that hinders the person to be guided when he or she walks by causing the speaker 30 to output (generate) a sound of the first type sound information SD1 through the speaker 30. That is, in the sound guidance system 1d, it is assumed that a physical object (an object), which hinders walking, is emitting a sound and the person to be guided is allowed to hear the sound emitted by the object. Thus, the height of a reference recording point R in the recording space for recording the sound representing the object to be ascertained by the person to be guided is a height corresponding to the height of the ear of the person to be guided. The range of a vertical direction in a recording space for recording a sound representing the object to be ascertained by the person to be guided is a range from the feet of the person to be guided to at least a height obtained by adding a predetermined height to the height of the person to be guided. At this time, the height at which each sound is recorded in the recording space is set to a resolution of, for example, 0.05 [m] in consideration of walking by the person to be guided. That is, each region in a height direction divided into 10 parts in Fig. 4 is further divided into 10 parts. An example in which a range from the feet of the person to be guided (a height of 0 [m]) to a height of 2.10 [m] is set as the range of a vehicle direction in which the first type sound information SD1 is recorded is shown in Fig. 19. In the following description, the position P of the first type sound information SD1 in each region within the recording space is represented by adding values representing heights from the feet of the person to be guided to "a to e" representing regions in the height direction as in the position P(A to K, 1 to 10, a-0 to e-210).

Also, as shown in Fig. 19, sounds of the first type sound information SD1 of a part of the range of the vertical direction corresponding to the head of the person to be guided (the first type sound information SD1 of a position P(A to K, 1, e-200)), a position P(A to K, 1, e-205), and a position P(A to K, 1, e-210) in Fig. 19) are not recorded and may be stored as sound source information 202 in the storage 200 and excluded from the range. Thereby, it is possible to reduce the amount of first type sound information SD1 stored in the storage 200.

As described above, in the sound guidance system 1d, in the recording space shown in Fig. 4, the first type sound information SD1 in which the tapping sound of metal is recorded in the range as shown in Figs. 18 and 19 is pre-stored as the sound source information 202 in the storage 200. Also, for example, a microphone disposed at a position corresponding to the ear of a model imitating a human being may be used as a microphone disposed at a recording point R for recording a sound. The model imitating the human being is disposed in a recording space where reverberation occurs and a tapping sound obtained by tapping metal with the same strength (i.e., a raw sound of a metal material) is recorded at positions in the horizontal direction and the vertical direction within the recording space, i.e., at positions where the resolution of the first type sound information SD1 is provided. At this time, the tapping sound of the metal to be emitted at each position within the recording space may be emitted using, for example, a tool for tapping the metal with the same strength. Also, for example, the tapping sound of the metal with the same strength may be emitted from an omnidirectional speaker. Thereby, first type sound information SD1 in which the tapping sound of the metal emitted at each position is recorded as a sound to be heard by the person to be guided at the position of the recording point R can be pre-stored as the sound source information 202 in the storage 200. That is, the first type sound information SD1 representing a relative positional relationship between the person to be guided and a physical object which is an object whose presence is reported by sound can be pre-stored as the sound source information 202 in the storage 200.

Also, an equalizer process such as, for example, a process of emphasizing reverberation, may be performed on a recorded sound so that the first type sound information SD1 can clearly represent the relative positional relationship between the person to be guided and the physical object which is the object.

Also, the range shown in Figs. 18 and 19 will be moved in upward, downward, left, and right directions in accordance with a direction of the face of the person to be guided. Thus, in the sound guidance system 1 of the fifth embodiment, even if the first type sound information SD1 is recorded in the range as shown in Figs. 18 and 19, it is also possible to notify the person to be guided of the presence of the object of the range of the recording space where the first type sound information SD1 is not recorded when the person to be guided changes a direction of his/her face.

Also, an example in which a range from the feet of the person to be guided (a height of 0 [m]) to a height of 2.10 [m] is set as the range of the vertical direction in which the first type sound information SD1 is recorded is shown in Fig. 19. However, it is only necessary for the range of the vertical direction in which the first type sound information SD1 is recorded to be at least a range up to a height obtained by adding 0.1 [m] to the height of the person to be guided. Thus, the sound guidance system 1d may be configured to cause the storage 200 to pre-store the sound source information 202 including the first type sound information SD1 recorded in accordance with the height of the person to be guided. For example, when the height of the person to be guided is 170 [cm], the sound guidance system 1d may be configured to cause the storage 200 to pre-store the sound source information 202 including the first type sound information SD1 recorded in a range from the feet of the person to be guided (the height of 0 [m]) to a height of 1.80 [m]. Also, for example, in consideration of a case in which a height obtained by adding 0.1 [m] to the height of the person to be guided becomes 2.10 [m] or more and the like, a plurality of types of sound source information 202 according to the height of the person to be guided may be provided in advance. In this case, the sound guidance system 1d may be configured to acquire the corresponding sound source information 202 in accordance with the height of the person to be guided registered before use and cause the storage 200 to store the acquired sound source information 202.

### [Processing flow]

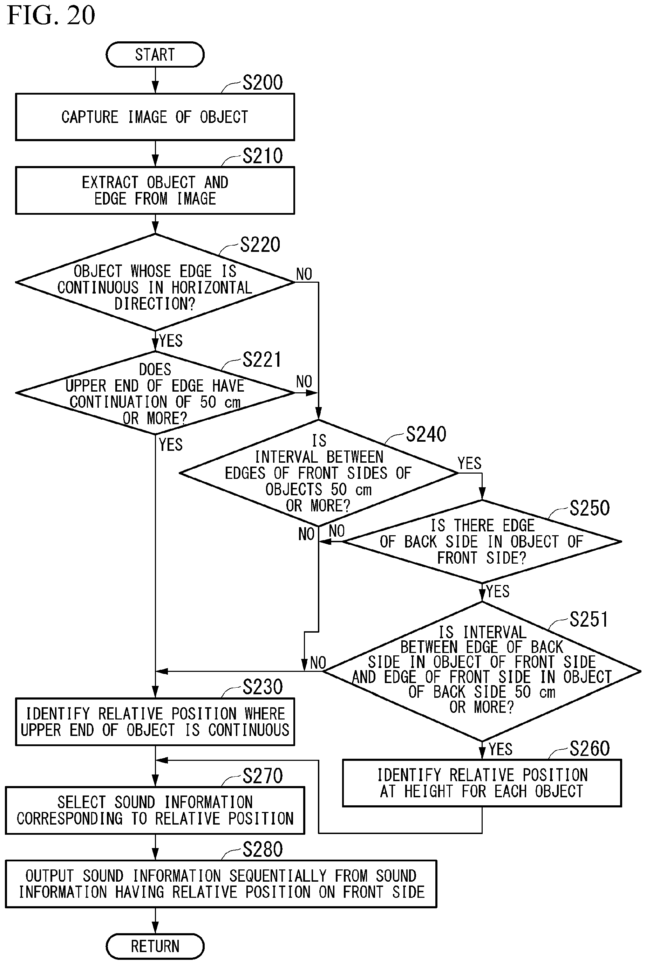

Fig. 20 is a flowchart showing an example of a process of the sound guidance system 1d according to the fifth embodiment. The process of the flowchart shown in Fig. 20 is iteratively executed at predetermined time intervals. That is, the sound guidance system 1d performs a process of the flowchart shown in Fig. 20 on a captured image every time the camera 20 (the right camera 20-1 and the left camera 20-2) images a view in front of the person to be guided while the camera 20 is being worn on the face of the person to be guided.

The camera 20 captures an image in which an object in front of the person to be guided is shown (step S200). A coordinate calculator 302 within a controller 300 provided in the notification device 100 of the sound guidance system 1d extracts a feature point of the object near the person to be guided on the basis of the image captured by the camera 20. The coordinate calculator 302 calculates coordinates CT representing a position of each feature point on an edge of the object that has been extracted (step S210). Here, for example, the coordinate calculator 302 may extract the object by determining the edge of the object on the basis of the brightness and darkness of each subject (physical object) shown in the image, colors (i.e., red (R), green (G), and blue (B)) constituting the image, and the like and calculate the coordinates CT representing a position of the edge of the extracted object.

Next, the position identifier 304 within the controller 300 provided in the notification device 100 of the sound guidance system 1d determines whether or not the object is an object (a physical object) whose edge is continuous in the horizontal direction (for example, a left-right direction or a depth direction) on the basis of the coordinates CT calculated by the coordinate calculator 302 (step S220).

When it is determined that the object is an object whose edge is continuous in the horizontal direction in step S220, the position identifier 304 determines whether or not an upper end of the edge of the object has a continuation of 50 [cm] or more on the basis of the coordinates CT calculated by the coordinate calculator 302 (step S221).

When it is determined that the upper end of the edge of the object has a continuation of 50 [cm] or more in step S221, the position identifier 304 identifies a relative position within the recording space corresponding to the coordinates CT calculated by the coordinate calculator 302 (step S230). More specifically, the position identifier 304 identifies a position P within the recording space corresponding to the coordinates CT representing the upper end of the object having the continuation of 50 [cm] or more in the horizontal direction within the recording space where the feet of the person to be guided (the height of 0 [m]) is designated as the origin O. Thereby, the coordinates CT of the upper end of the object continuous in the horizontal direction calculated by the coordinate calculator 302 are relatively associated with the position P within the recording space. The position identifier 304 moves the process to step S270.

On the other hand, when it is determined that the object is not an object whose edge is continuous in the horizontal direction in step S220 of when it is determined that the upper end of the edge of the object does not have a continuation of 50 [cm] or more in step S221, the position identifier 304 determines whether or not the distance between front edges of objects is 50 [cm] or more on the basis of the coordinates CT calculated by the coordinate calculator 302 (step S240).

When it is determined that the distance between the front edges of the objects is not 50 [cm] or more in step S240, the position identifier 304 moves the process to step S230. This is because, when objects shown in the image are objects whose edges are not continuous in the horizontal direction or whose upper ends do not have a continuation of 50 [cm] or more but it is difficult for the person to be guided to pass between the objects, the sound guidance system 1d treats the objects as objects having upper ends of the edges having a continuation of 50 [cm] or more in the horizontal direction.

On the other hand, when it is determined that the distance between the front edges of the objects is 50 [cm] or more in step S240, the position identifier 304 determines whether or not the object of the front side has an edge of the back side on the basis of the coordinates CT calculated by the coordinate calculator 302 (step S250).

When it is determined that the object of the front side has an edge of the back side in step S250, the position identifier 304 determines whether or not an interval between the edge of the back side in the object of the front side and the edge of the front side in the object of the back side is 50 [cm] or more on the basis of the coordinates CT calculated by the coordinate calculator 302 (step S251).

When it is determined that the object of the front side does not have an edge of the back side in step S250 or when it is determined that the interval between the edge of the back side in the object of the front side and the edge of the front side in the object of the back side is not 50 [cm] or more in step S251, the position identifier 304 moves the process to step S230. This is because, when the distance between the edges of the front sides of the objects shown in the image is 50 [cm] or more but the edge of the back side in the object of the front side cannot be recognized or the interval between the edge of the back side in the object of the front side and the edge of the front side in the object of the back side is not 50 [cm] or more, the sound guidance system 1d treats the process as in step S240. That is, the sound guidance system 1d treats the objects as the objects of the horizontal direction between which it is difficult for the person to be guided to pass.

On the other hand, when it is determined that the interval between the edge of the back side in the object of the front side and the edge of the front side in the object of the back side is 50 [cm] or more in step S251, the position identifier 304 identifies a relative position within the recording space corresponding to the coordinates calculated by the coordinate calculator 302 at the height of the object for each object (step S260). More specifically, the position identifier 304 identifies a position P within the recording space corresponding to coordinates CT representing a position where there are objects between which an interval is 50 [cm] or more in the recording space where the feet of the person to be guided (the height of 0 [m]) is designated as the origin O. The position identifier 304 identifies how high the height of each object is at the identified position P. Thereby, the coordinates CT of each object calculated by the coordinate calculator 302 is relatively associated with a range of the position P within the recording space. The position identifier 304 moves the process to step S270.

Next, the selector 308 within the controller 300 provided in the notification device 100 of the sound guidance system 1d selects first type sound information SD1 corresponding to a relative position of the coordinates CT identified by the position identifier 304 from the sound source information 202 stored in the storage 200 (step S270).

The selector 308 outputs the selected first type sound information SD1 to the speaker 30 sequentially from first type sound information SD1 having a relative position on the front side (step S280). More specifically, when the selected first type sound information SD1 is only the first type sound information SD1 at different positions P in the horizontal direction, the selector 308 sequentially outputs the first type sound information SD1 to the speaker 30 from the side closer to the person to be guided to the side farther from the person to be guided. In other words, when the selected first type sound information SD1 is only the first type sound information SD1 of positions P where the vertical direction (the height) is the same, the selector 308 sequentially outputs the first type sound information SD1 to the speaker 30 so that the first type sound information SD1 is continuous. Also, when the selected first type sound information SD1 includes a plurality of pieces of first type sound information SD1 having different heights at the same position P, the selector 308 sequentially outputs the first type sound information SD1 so that the progress is made from the lower position to the higher position on the side closer to the person to be guided and the progress from the lower position to the higher position proceeds from the side closer to the person to be guided to the side farther from the person to be guided. In other words, when the first type sound information SD1 of different positions P in the vertical direction and the first type sound information SD1 of different positions P in the horizontal direction are included in the selected first type sound information SD1, the selector 308 sets an output in which the first type sound information SD1 having different positions P in the vertical direction at the same position P in the horizontal direction is continuous to the speaker 30 as one set and moves each set in the horizontal direction. Thereby, the speaker 30 sequentially outputs (generates) sounds of the first type sound information SD1 output by the selector 308.

Also, for example, the distance between the person to be guided and the position P for determining the order in which the selector 308 outputs the first type sound information SD1 to the speaker 30 can be obtained on the basis of the distance from the origin O to the position P in the left-right direction, the distance from the origin O to the position P in the depth direction, and the distance from the origin O to the position P in the height direction using the position of the person to be guided in the recording space as the origin O.

### [First example of notification of object]

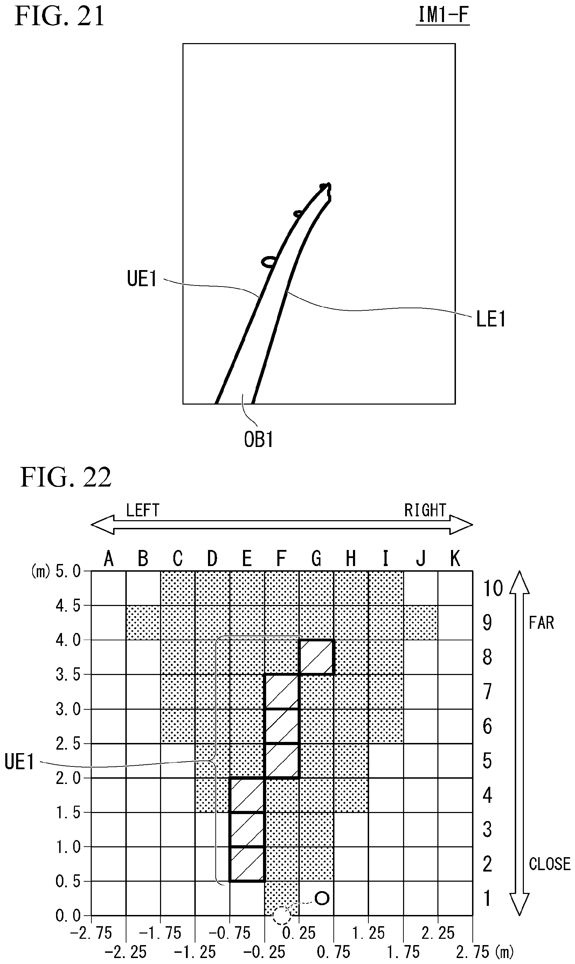

Here, an example in which the person to be guided is notified of the presence of the object in the sound guidance system 1d will be described. In the first example, for example, a case in which the camera 20 captures the image IM1 shown in Fig. 5 and provides a notification of the presence of an object OB1 (a guardrail) serving as a physical object which is a notification target will be described. In this case, the coordinate calculator 302 extracts feature points of the object OB1 near the person to be guided on the basis of the image IM captured by the camera 20. Fig. 21 is a diagram showing an example of an image IM1-F representing the feature points of the object OB1 extracted from the image IM1 by the coordinate calculator 302.

The object OB1 shown in the image IM1-F is an object whose edge is continuous in the horizontal direction and whose upper end has a continuation of 50 [cm] or more. In this case, the coordinate calculator 302 calculates coordinates CT representing the position of each feature point of the edge (for example, an upper end UE1 and a lower end LE1) of the object OB1. The position identifier 304 determines that the object OB1 is an object whose edge is continuous in the horizontal direction and whose upper end UE1 has a continuation of 50 [cm] or more on the basis of coordinates CT calculated by the coordinate calculator 302. Thereby, the position identifier 304 associates coordinates CT of the upper end UE1 of the object OB1 with each position P within the recording space.

Fig. 22 is a diagram showing an example in which the position of the upper end UE1 of the object OB1 is associated within the recording space. An example in which the position identifier 304 identifies the position P corresponding to coordinates CT of the upper end UE1 within the range of the horizontal direction in which the first type sound information SD1 shown in Fig. 18 is recorded is shown in Fig. 22. Also, the object OB1 is an object having a constant height of the upper end UE1. For example, the height of the upper end UE1 is uniformly 50 [cm]. In this case, the position identifier 304 identifies a position P having a height (i.e., a position of the vertical direction) of 50 [cm] in a range of the horizontal direction shown in Fig. 22. Also, in Fig. 22, the origin O at the feet (the height of 0 [m]) of the person to be guided is indicated by a broken line.

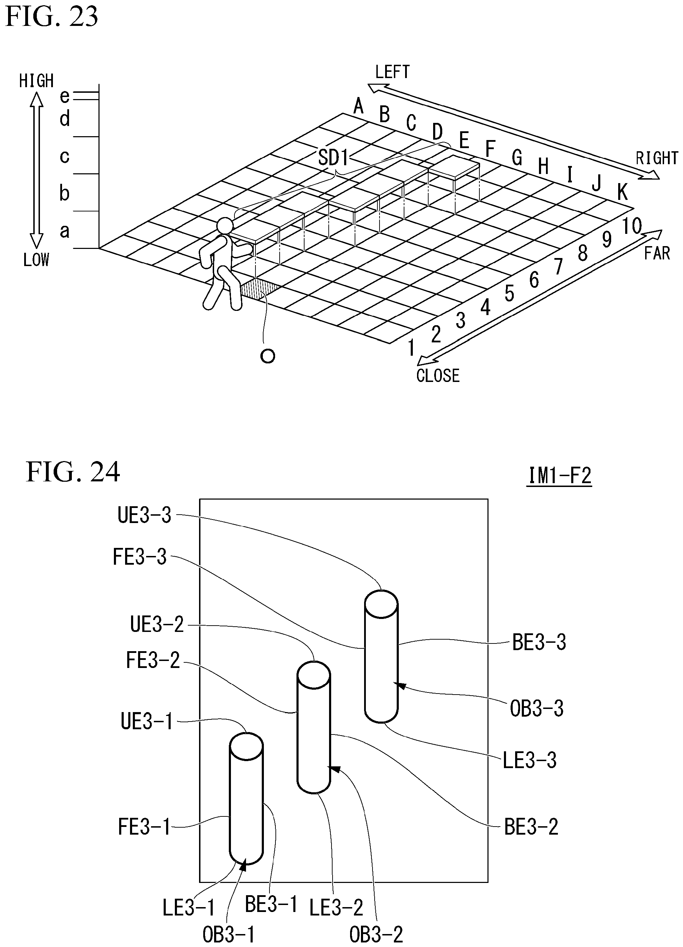

The selector 308 selects first type sound information SD1 of positions P identified by the position identifier 304 from the sound source information 202 and sequentially outputs the selected first type sound information SD1 to the speaker 30. Thereby, the speaker 30 sequentially outputs (generates) sounds of the first type sound information SD1 output by the selector 308. Fig. 23 is a diagram showing an example in which the person to be guided is notified of the presence of an object (the object OBI) according to the sound source information 202 selected by the selector 308 in the sound guidance system 1d according to the fifth embodiment.

In Fig. 23, the selector 308 selects the first type sound information SD1 of each position P corresponding to the upper end UE1 of the object OB1 identified by the position identifier 304 and outputs the selected first type sound information SD1 to the speaker 30 in the order of a position P(E, 2, b-50), a position P(E, 3, b-50), a position P(E, 4, b-50), a position P(F, 5, b-50), a position P(F, 6, b-50), a position P(F, 7, b-50), and a position P(G, 8, b-50). Thereby, the speaker 30 sequentially outputs (generates) sounds of the first type sound information SD1 in the order of outputs from the selector 308. In the example shown in Fig. 23, the sound of the first type sound information SD1 of the position P(E, 2, b-50) is generated by the speaker 30 so that the sound sequentially decreases in accordance with a direction toward the position P(G, 8, b-50). In other words, the speaker 30 generates a sound capable of being heard by the person to be guided as if the object OB1 having a height of 50 [cm] continuous from the side closer to the person to be guided to the side farther from the person to be guided is generating the sound. Also, the selector 308 iterates the output of the first type sound information SD1 to the speaker 30 so that the generation of the sounds of the first type sound information SD1 in the order of the positions P(E, 2, b-50) to P(G, 8, b-50) is iterated. Thereby, the person to be guided can recognize that the object OB1 having a height of 50 [cm] continuously is in a direction from the closer side to the farther side within a space in the forward direction.

### [Second example of notification of object]

Next, a second example in which the person to be guided is notified of the presence of the object in the sound guidance system 1d will be described. In the second example, a case in which the camera 20 images objects installed at predetermined intervals such as piles or poles and provides a notification of the objects which are notification targets will be described. Fig. 24 is a diagram showing an example of an image IM1 -F2 representing a feature point of the object extracted by the coordinate calculator 302. An example in which the coordinate calculator 302 extracts feature points of three piles (objects OB3-1 to OB3-3) having a height of 50 [cm] near the person to be guided is shown in Fig. 24. Also, in the second example, it is assumed that the objects OB3-1 to OB3-3 are installed at intervals of 50 [cm] or less.

In this case, the coordinate calculator 302 calculates coordinates CT representing positions of feature points of edges of the objects OB3-1 to OB3-3 (for example, an upper end UE3, a lower end LE3, a front end FE3, and a back end BE3). The position identifier 304 determines that intervals between edges on the front sides of the objects OB3-1 to OB3-3, i.e., a front end FE3-1, a front end FE3-2, and a front end FE3-3, are not 50 [cm] or more, on the basis of the coordinates CT calculated by the coordinate calculator 302. Alternatively, the position identifier 304 determines that an interval between a back end BE3-1, which is the edge of the back side in the object OB3 (for example, the object OB3-1) of the front side, and a front end FE3-2 in the object OB3 (for example, the object OB3-2) of the back side is not 50 [cm] or more on the basis of the coordinates CT calculated by the coordinate calculator 302.

In this case, although the objects OB3-1 to OB3-3 are different objects, the position identifier 304 treats the objects OB3-1 to OB3-3 as objects of a horizontal direction in which upper ends have a continuation of 50 [cm] or more. Thus, the position identifier 304 associates coordinates CT of upper ends of the objects OB3-1 to OB3-3, i.e., the upper end UE3-1, the upper end UE3-2, and the upper end UE3-3, with positions P within the recording space. Thereby, in the second example, the position identifier 304 also identifies the position P corresponding to the coordinates CT of the upper end UE3 of each object OB3 within the range of the horizontal direction in which the first type sound information SD1 shown in Fig. 18 is recorded, as in the example shown in Fig. 22 in the first example. In the second example, the selector 308 also sequentially outputs the selected first type sound information SD1 to the speaker 30 as in the example shown in Fig. 23 in the first example. Thereby, the person to be guided can recognize that objects OB3 having a height of 50 [cm] are continuously present in a direction from the closer side to the farther side within the space in the forward direction as in the case of the object OB1 of the first example.

### [Third example of notification of object]

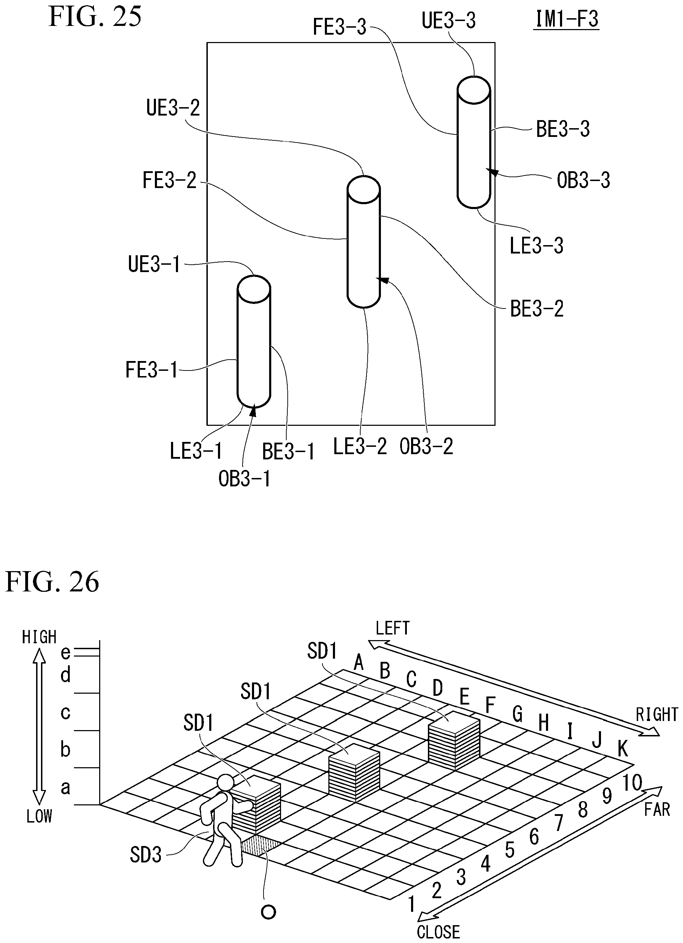

Next, a third example in which the person to be guided is notified of the presence of the object in the sound guidance system 1d will be described. In the third example, a notification of each object OB3 serving as a physical object which is a notification target when the objects OB3-1 to OB3-3 in the second example are installed at intervals of 50 [cm] or more will be described. Fig. 25 is a diagram showing an example of an image 1M1-F3 showing a feature point of an object extracted by the coordinate calculator 302. An example in which the coordinate calculator 302 has extracted feature points when the three piles (the objects OB3-1 to OB3-3) having a height of 50 [cm] near the person to be guided are installed at intervals of 50 [cm] or more is shown in Fig. 25.

In this case, as in the second example, the coordinate calculator 302 calculates coordinates CT representing positions of feature points of edges of the objects OB3-1 to OB3-3 (for example, the upper end UE3, the lower end LE3, the front end FE3, and the back end BE3). The position identifier 304 determines that distances between the front ends FE3 of the objects OB3-1 to OB3-3 are 50 [cm] or more on the basis of the coordinates CT calculated by the coordinate calculator 302. Further, the position identifier 304 determines that an interval between the back end BE3-1 of the object OB3 (for example, the object OB3-1) of the front side and the front end FE3-2 in the object OB3 (for example, the object OB3-2) of the back side is 50 [cm] or more on the basis of the coordinates CT calculated by the coordinate calculator 302.

In this case, the position identifier 304 identifies a position P corresponding to the coordinates CT of the front end FE3 for each object OB3 within a range of the horizontal direction in which the first type sound information SD1 shown in Fig. 18 is recorded under the assumption that the objects OB3-1 to OB3-3 are different objects in the vertical direction. More specifically, the position identifier 304 identifies positions P from the feet of the person to be guided (a height of 0 [m]) to a height of 50 [cm], i.e., the upper end UE3, at the position of the front end FE3-1 as the position P corresponding to the coordinates CT of the object OB3-1. Likewise, the position identifier 304 identifies positions P from the feet of the person to be guided (the height of 0 [m]) to the height of 50 [cm] at the positions of the objects OB3-2 and OB3-3.

The selector 308 selects first type sound information SD1 of positions P identified by the position identifier 304 from the sound source information 202 and sequentially outputs the selected first type sound information SD1 to the speaker 30. At this time, the selector 308 initially sequentially outputs the first type sound information SD1 from the first type sound information SD1 of the position P of the height of 0 [m] in the object OB3-1 on the side closest to the person to be guided to the first type sound information SD1 of the position P of the height of 50 [m] to the speaker 30. Subsequently, the selector 308 sequentially outputs the first type sound information SD1 of the positions P of the heights from 0 [m] to 50 [cm] in the object OB3-2 to the speaker 30 and finally sequentially outputs the first type sound information SD1 of the positions P of the heights from 0 [m] to 50 [cm] in the object OB3-3 farthest from the person to be guided to the speaker 30. Thereby, the speaker 30 sequentially outputs (generates) sounds of the first type sound information SD1 output by the selector 308.

Fig. 26 is a diagram showing an example in which the person to be guided is notified of the presence of an object (the objects OB3-1 to OB3-3) according to the sound source information 202 selected in the sound guidance system 1d according to the fifth embodiment. In Fig. 26, the selector 308 selects first type sound information SD1 of positions P corresponding to heights up to the upper end UE3 (the height of 50 [cm]) at the position of the front end FE3 of each of the objects OB3-1 to OB3-3 identified by the position identifier 304 and outputs the selected first type sound information SD1 to the speaker 30. More specifically, the selector 308 initially outputs the first type sound information SD1 selected in the order of positions P(E, 2, a-0) to P(E, 2, b-50) to the speaker 30. Subsequently, the selector 308 continuously outputs the first type sound information SD1 selected in the order of positions P(F, 5, a-0) to P(F, 5, b-50) to the speaker 30. Finally, the selector 308 outputs the first type sound information SD1 selected in the order of positions P(G, 8, a-0) to P(G, 8, b-50) to the speaker 30. Thereby, the speaker 30 outputs (generates) sounds of the first type sound information SD1 in the order of outputs from the selector 308.

In the example shown in Fig. 26, the sound of the first type sound information SD1 of the position P(E, 2, a-0) is generated by the speaker 30 so that the sound sequentially increases in accordance with a direction toward the position P(E, 2, b-50). Subsequently, the sound of the first type sound information SD1 of the position P(F, 5, a-0) is generated by the speaker 30 so that the sound sequentially increases in accordance with a direction toward the position P(F, 5, b-50). Subsequently, the sound of the first type sound information SD1 of the position P(G, 8, a-0) is generated by the speaker 30 so that the sound sequentially increases in accordance with a direction toward the position P(G, 8, b-50). In other words, the speaker 30 generates a sound capable of being heard by the person to be guided as if the objects OB3 having the height of 50 [cm] installed from the side closer to the person to be guided to the side farther from the person to be guided extend while generating the sound. Also, the selector 308 iterates the output of the first type sound information SD1 to the speaker 30 so that the speaker 30 iterates the generation of the sounds of the first type sound information SD1 to the speaker 30 in the order of positions P(E, 2, a-0) to P(E, 2, b-50), positions P(F, 5, a-0) to P(F, 5, b-50), and positions P(G, 8, a-0) to P(G, 8, b-50). Thereby, the person to be guided can recognize that three object OB3s having the height of 50 [cm] are arranged side by side at intervals of 50 [cm] or more within the space in the forward direction.

### [Fourth example of notification of object]

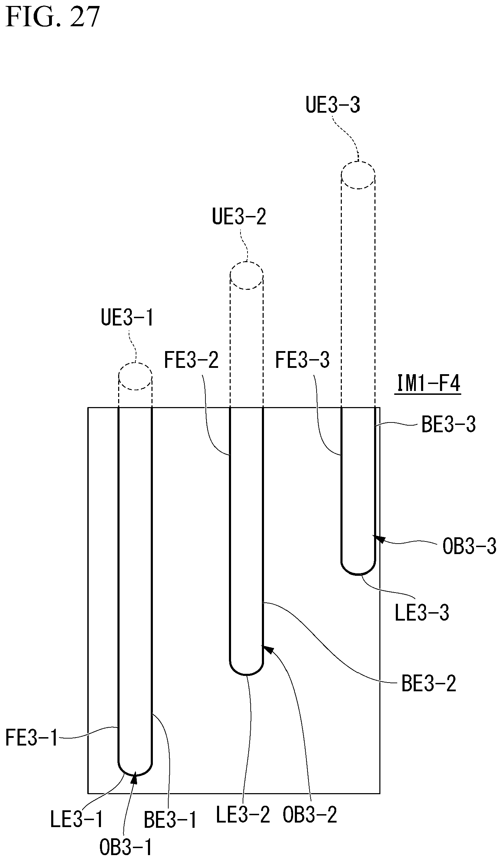

Next, a fourth example in which the person to be guided is notified of the presence of an object in the sound guidance system 1d will be described. In the fourth example, for example, a case in which objects OB3 are reported as objects which are notification targets when heights of objects OB3-1 to OB3-3 such as street light poles or utility poles are high and upper ends UE3 thereof are not shown in an image IM outside the imaging range of the camera 20 will be described. Fig. 27 is a diagram showing an example of an image 1M1-F4 showing a feature point of an object extracted by the coordinate calculator 302. An example in which the coordinate calculator 302 has extracted feature points when three piles (the objects OB3-1 to OB3-3) having high heights (for example, 5 [m]) near the person to be guided are installed at intervals of 50 [cm] or more is shown in Fig. 27.

In this case, the coordinate calculator 302 calculates coordinates CT representing positions of feature points of edges of the objects OB3-1 to OB3-3 as in the second and third examples. However, in the fourth example, an upper end UE3 of each of the objects OB3-1 to OB3-3 is not shown in the image IM1-F4. Thus, the coordinate calculator 302 calculates coordinates CT of the upper end UE3 under the assumption that the upper end UE3 of each object OB3 is at the maximum height, i.e., 2.10 [m], in the sound source information 202 stored in the storage 200. Thereby, the position identifier 304 determines that intervals between front ends FE3 of the objects OB3-1 to OB3-3 are 50 [cm] or more on the basis of coordinates CT calculated by the coordinate calculator 302 as in the third example. Further, as in the third example, the position identifier 304 determines that an interval between a back end BE3-1 of the object OB3 (for example, the object OB3-1) of the front side and a front end FE3-2 in the object OB3 (for example, the object OB3-2) of the back side is 50 [cm] or more on the basis of the coordinates CT calculated by the coordinate calculator 302.

In this case, the position identifier 304 identifies a position P corresponding to the coordinates CT of the front end FE3 for each object OB3 under the assumption that the objects OB3-1 to OB3-3 are different objects in the vertical direction as in the third example. At this time, the position identifier 304 identifies positions P from the feet of the person to be guided (the height of 0 [m]) to the height of 2.10 [m], i.e., the maximum height at which the person to be guided is notified of the presence of the object, at a position of the front end FE3 serving as the position P corresponding to coordinates CT of each object OB3.

As in the third example, the selector 308 selects first type sound information SD1 of positions P identified by the position identifier 304 from the sound source information 202 and sequentially outputs the selected first type sound information SD1 to the speaker 30. Thereby, the speaker 30 sequentially outputs (generates) sounds of the first type sound information SD1 output by the selector 308.

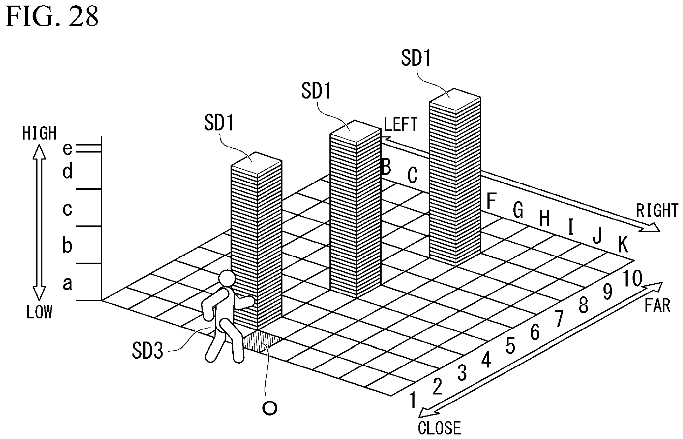

Fig. 28 is a diagram showing an example in which the person to be guided is notified of the presence of objects (the objects OB3-1 to OB3-3) according to the sound source information 202 selected in the sound guidance system 1d according to the fifth embodiment. In Fig. 28, the selector 308 selects first type sound information SD1 of positions P corresponding to heights up to the upper end UE (the height of 2.10 [m]) at the front end FE3 of each of the objects OB3-1 to OB3-3 identified by the position identifier 304 and outputs the selected first type sound information SD1 to the speaker 30. More specifically, the selector 308 initially outputs the first type sound information SD1 selected in the order of positions P(E, 2, a-0) to P(E, 2, e-210) to the speaker 30. Subsequently, the selector 308 continuously outputs the first type sound information SD1 selected in the order of positions P(F, 5, a-0) to P(F, 5, e-210) to the speaker 30. Finally, the selector 308 outputs the first type sound information SD1 selected in the order of positions P(G, 8, a-0) to P(G, 8, e-210) to the speaker 30. Thereby, the speaker 30 sequentially outputs (generates) sounds capable of being heard by the person to be guided as if the objects OB3 installed from the side closer to the person to be guided to the side farther from the person to be guided extend overhead while generating the sounds. Also, as in the third example, the selector 308 iterates the output of the first type sound information SD1 to the speaker 30 so that the generation of the sounds of the first type sound information SD1 is iterated in the order of positions P(E, 2, a-0) to P(E, 2, e-210), positions P(F, 5, a-0) to P(F, 5, e-210), and positions P(G, 8, a-0) to P(G, 8, e-210). Thereby, the person to be guided can recognize that three object OB3s, which are higher than his/her height, are arranged side by side at intervals of 50 [cm] or more within the space in the forward direction.

Also, a case in which the height of the object OB3 is higher than the height of the person to be guided has been described in the fourth example. However, an object whose edge (more specifically, upper end) has a continuation of 50 [cm] or more in the horizontal direction as in the first example may also be, for example, an object whose height is high and whose upper end is outside the imaging range of the camera 20 such as a building, an apartment, a wall, or the like. In this case, as in the fourth example, the coordinate calculator 302 calculates coordinates CT of the upper end under the assumption that the upper end of the object in the horizontal direction is at the maximum height (2.10 [m]) in the sound source information 202 stored in the storage 200. Thereby, as in the first example, the position identifier 304 identifies each position P where the height is 2.10 [m] as a position corresponding to coordinates CT of the upper end of the object in the horizontal direction. As in the first example, the selector 308 selects first type sound information SD1 of positions P identified by the position identifier 304 from the sound source information 202 and sequentially outputs the selected first type sound information SD1 to the speaker 30. Thereby, the speaker 30 sequentially outputs (generates) sounds of the first type sound information SD1 output by the selector 308. That is, the speaker 30 generates a sound capable of being heard by the person to be guided as if the object having the height of 2.10 [m] continuous in the horizontal direction from the side closer to the person to be guided to the side farther from the person to be guided is generating the sound. Also, the selector 308 iterates the output of the first type sound information SD1 to the speaker 30 in the order of outputs from the selector 308. Thereby, the person to be guided can recognize that the object having the height of 2.10 [m] is continuously present in a direction from the closer side to the farther side within a space in the forward direction.

### [Summary of fifth embodiment]

The sound guidance system 1d including the notification device 100 of the present embodiment includes: a detector (the camera 20 in the present example) configured to detect a physical object near a moving person (the person to be guided in the present example); a relative position acquirer (the coordinate calculator 302 and the position identifier 304 in the present example) configured to acquire a relative position with respect to the physical object (an object such as the object OB1 in the present example) for which the camera 20 is designated as a base point; the storage 200 configured to store sound information SD (for example, the first type sound information SD1) in which sounds emitted from a plurality of positions P away from a predetermined recording point R are pre-recorded for each position P with respect to the predetermined recording point R within a predetermined recording space and the recorded sounds are associated with relative positional relationships between the recording point R and the positions P; and the selector 308 configured to select the sound information SD corresponding to the relative position from the sound information SD stored in the storage 200 on the basis of the relative positional relationship corresponding to the relative position acquired by the relative position acquirer. The sound of the sound information SD selected by the selector 308 is generated by a generator (the speaker 30 in the present example) and the moving person is notified of information about the physical object (for example, a position where the object is present, the length of the object continuous in the horizontal direction, the height of the object, and the like) detected by the detector.

Also, in each of the above-described embodiments, a case in which the detector is the stereo camera including the right camera 20-1 and the left camera 20-2 has been described. However, the detector may have any configuration as long as it can detect a physical object in front of the person to be guided and measure the distance from the person to be guided to the detected physical object. For example, a radar device or a light detection and ranging or laser imaging detection and ranging (LIDAR) sensor may be used as the detector. The radar device is a device that detects at least the distance to the physical object or a direction by radiating radio waves toward the physical object near the person to be guided and measuring radio waves (reflected waves) reflected by the physical object. Here, the radio waves emitted by the radar device refer to electromagnetic waves having a lower frequency (in other words, a longer wavelength) than light among electromagnetic waves. Also, electromagnetic waves having the lowest frequency among electromagnetic waves having the property of light are referred to as infrared rays (or far infrared rays), but the radio waves radiated by the radar device have a lower frequency (for example, millimeter waves or the like). Also, the radar device may detect the position and the speed of the physical object in a frequency modulated continuous wave (FM-CW) scheme. LIDAR is one of remote sensing technologies using light. In the LIDAR technology, laser light for emitting pulsed light is radiated and scattered light is measured, so that the distance to an object at a long distance and properties of the object can be analyzed.

Although modes for carrying out the present invention have been described above using the embodiments, the present invention is not limited to the embodiments and various modifications and replacements can be applied without departing from the scope of the present claims.

### [Reference Signs List]

1, 1a, 1b, 1c Sound guidance system
10, 10a Base
20 Camera
20-1 Right camera
20-2 Left camera
30, 70 Speaker
30-1, 70-1 Right speaker
30-2, 70-2 Left speaker
40 Navigation device
41 GNSS receiver
42 Navigation HMI
43 Route determiner
44 First map information
50 Communication device
100, 100a Notification device
200, 200a storage
202, 202a Sound source information
204 Danger level information
300, 300a controller
302 Coordinate calculator
304 Position identifier
306 Material determiner
308 selector
310 Danger level determiner
400 Vehicle
500 Wireless earphone device
TM Terminal device
SD Sound information
SD1, SD1-1, SD1-1100 First type sound information
SD2, SD2-1, SD2-1100 Second type sound information
SD3, SD3-1, SD3-1100 Object end notification sound
SD4 Danger sound information

## Claims

1. A notification device (100, 100a) for guiding a person comprising:
a detector (20) configured to detect a physical object present around the moving person in a real space;
a relative position acquirer (302, 304) configured to acquire a relative position between the detector (20) and the physical object for which the detector (20) is designated as a base point in the real space;
a storage (200, 200a) storing sound information in which sounds, which have been emitted from a plurality of positions away from a predetermined recording point within a predetermined recording space when recording the sounds, are pre-recorded for each of the plurality of positions away from the recording point, the recording space being for recording sounds to be used for notification to the moving person, and the recorded sounds are associated with relative positional relationships between the recording point and the plurality of positions away from the recording point;
a selector (308) configured to select the sound information associated with the relative position from the sound information stored in the storage (200, 200a) on the basis of the relative positional relationship in the recording space associated with the relative position in the real space acquired by the relative position acquirer (302, 304); and
a generator (30) configured to generate the sounds of the sound information selected by the selector (308) to notify, in the real space, the moving person of information about the physical object detected by the detector (20).

2. The notification device (100, 100a) according to claim 1,
wherein the notification device (100, 100a) is worn by the moving person.

3. The notification device (100, 100a) according to claim 1 or 2,
wherein the selector (308) selects a plurality of pieces of the sound information associated with the relative position, and
wherein the generator (30) sequentially generates the sounds of the plurality of pieces of the sound information selected by the selector (308).

4. The notification device (100, 100a) according to claim 1 or 2,
wherein the sound information is sound information in which sounds emitted from the plurality of positions, which are away from the recording point and have different distances in left and right directions, a forward direction, and a height direction, are pre-recorded for each of the plurality of positions away from the recording point in the recording space and the recorded sounds are associated with relative positional relationships between the recording point and the plurality of positions away from the recording point,
wherein the selector (308) selects a plurality of pieces of the sound information associated with the relative position, and
wherein t the generator (30) sequentially generates the sounds of the plurality of pieces of the sound information selected by the selector (308) so that volumes of the sounds vary with a position, a direction, or a distance.

5. The notification device (100, 100a) according to claim 1 or 2,
wherein the sound information is sound information in which sounds emitted from the plurality of positions away from the recording point are pre-recorded for each of the plurality of positions away from the recording point in the recording space and for each material of the physical object and the recorded sounds are associated with relative positional relationships between the recording point and the plurality of positions away from the recording point,
wherein the selector (308) selects a plurality of pieces of the sound information associated with the material of the physical object and the relative position, and
wherein the generator (30) sequentially generates the sounds of the plurality of pieces of the sound information selected by the selector (308).

6. The notification device (100, 100a) according to claim 1 or 2,
wherein the sound information is sound information in which sounds emitted from the plurality of positions, which are away from the recording point and have different distances in left and right directions, a forward direction, and a height direction, are pre-recorded for each of the plurality of positions away from the recording point in the recording space and for each material of the physical object and the recorded sounds are associated with relative positional relationships between the recording point and the plurality of positions away from the recording point,
wherein the selector (308) selects a plurality of pieces of the sound information associated with the material of the physical object and the relative position, and
wherein the generator (30) sequentially generates the sounds of the plurality of pieces of the sound information selected by the selector (308) so that volumes of the sounds vary with a position, a direction, or a distance, and to notify the moving person of information about the position, the direction, and the distance of the physical object and the material of the physical object detected by the detector (20).

7. The notification device (100, 100a) according to any one of claims 3 to 6,
wherein the selector (308) selects a plurality of pieces of the sound information representing continuity of the physical object.

8. The notification device (100, 100a) according to claim 7,
wherein the selector (308) selects a plurality of pieces of the sound information representing continuity of an edge of the physical object.

9. The notification device (100, 100a) according to any one of claims 1 to 8,
wherein the pre-recorded sounds in the recording space have been emitted by hitting the physical object at each of the plurality of positions away from the recording point at predetermined intervals.

10. The notification device (100, 100a) according to claim 9,
wherein the pre-recorded sounds in the recording space have been emitted with the same volume at each of the plurality of positions away from the recording point.

11. The notification device (100, 100a) according to any one of claims 1 to 10,
wherein a position of the recording point in a horizontal direction is a center of an edge of the recording space, and
wherein a position of the recording point in a vertical direction is a height at which the moving person hears the sound generated by the generator (30).

12. The notification device (100, 100a) according to claim 11,
wherein a range of the pre-recorded sounds in the recording space in the horizontal direction is a range that extends in front of the moving person as a distance from the moving person increases, and
wherein a range of the pre-recorded sounds in the vertical direction is a range of a height obtained by adding a predetermined height to the height at which the sound is heard from feet of the moving person.

13. A notification method that causes a computer of a notification device (100, 100a) according to claim 1 to perform steps comprising:
a step of causing a detector (20) to detect a physical object presenting around a moving person in a real space;
a step of acquiring a relative position between the detector (20) and the physical object for which the detector (20) is designated as a base point in the real space;
a step of selecting sound information associated with the relative position from sound information stored in a storage (200, 200a) on the basis of a relative positional relationship in a predetermined recording space associated with the acquired relative position in the real space, the recording space being for recording sounds to be used for notification to the moving person, wherein the storage (200, 200a) stores the sound information in which sounds, which have been emitted from a plurality of positions away from a predetermined recording point within the recording space when recording the sounds, are pre-recorded for each of the plurality of positions away from the recording point, and the recorded sounds are associated with relative positional relationships between the recording point and the plurality of positions away from the recording point; and
a step of causing a generator (30) to generate the sounds of the selected sound information and to notify, in the real space, the moving person of information about the detected physical object.

14. A program for causing a computer of a notification device (100, 100a) according to claim 1 to execute steps of:
a step of causing a detector (20) to detect a physical object presenting around a moving person in a real space;
a step of acquiring a relative position between the detector (20) and the physical object for which the detector (20) is designated as a base point in the real space;
a step of selecting sound information associated with the relative position from sound information stored in a storage (200, 200a) on the basis of a relative positional relationship in a predetermined recording space associated with the acquired relative position in the real space, the recording space being for recording sounds to be used for notification to the moving person, wherein the storage (200, 200a) stores the sound information in which sounds, which have been emitted from a plurality of positions away from a predetermined recording point within the recording space when recording the sounds, are pre-recorded for each of the plurality of positions away from the recording point, and the recorded sounds are associated with relative positional relationships between the recording point and the plurality of positions away from the recording point; and
a step of causing a generator (30) to generate the sounds of the selected sound information and to notify, in the real space, the moving person of information about the detected physical object.

## Patentansprüche

1. Benachrichtigungsvorrichtung (100, 100a) zum Führen einer Person, umfassend:
einen Detektor (20), der konfiguriert ist, um ein körperliches Objekt zu detektieren, das sich in der Umgebung der sich in einem realen Raum bewegenden Person befindet;
einen Relativpositionserfasser (302, 304), der konfiguriert ist, um eine Relativposition zwischen dem Detektor (20) und dem körperlichen Objekt, für das der Detektor (20) bestimmt ist, als Basispunkt im realen Raum zu erfassen;
einen Speicher (200, 200a), der Geräuschinformation speichert, in der Geräusche, die von mehreren von einem vorbestimmten Aufzeichnungspunkt entfernten Positionen innerhalb eines vorbestimmten Aufzeichnungsraums, wenn die Geräusche aufgezeichnet werden, abgegeben worden sind, für jede der mehreren von dem Aufzeichnungspunkt entfernten Positionen vorab aufgezeichnet werden, wobei der Aufzeichnungsraum zum Aufzeichnen von Geräuschen dient, die zur Benachrichtigung der sich bewegenden Person zu verwenden sind, und die aufgezeichneten Geräusche relativen Positionsbeziehungen zwischen dem Aufzeichnungspunkt und den mehreren von dem Aufzeichnungspunkt entfernten Positionen zugeordnet sind;
einen Selektor (308), der konfiguriert ist, um die der Relativposition zugeordnete Geräuschinformation aus der in dem Speicher (200, 200a) gespeicherten Geräuschinformation auf der Basis der relativen Positionsbeziehung in dem Aufzeichnungsraum auszuwählen, die der vom Relativpositionserfasser (302, 304) erfassten Relativposition im realen Raum zugeordnet ist; und
einen Generator (30), der konfiguriert ist, um die Geräusche der vom Selektor (308) gewählten Geräuschinformation zu erzeugen, um die sich im realen Raum bewegende Person von Information über das vom Detektor (20) detektierte körperliche Objekt zu benachrichtigen.

2. Die Benachrichtigungsvorrichtung (100, 100a) nach Anspruch 1,
wobei die Benachrichtigungsvorrichtung (100, 100a) von der sich bewegenden Person getragen wird.

3. Die Benachrichtigungsvorrichtung (100, 100a) nach Anspruch 1 oder 2,
wobei der Selektor (308) mehrere Stücke der der Relativposition zugeordneten Geräuschinformation auswählt, und
wobei der Generator (30) die Geräusche der mehreren vom Selektor (308) gewählten Stücke der Geräuschinformation sequentiell erzeugt.

4. Die Benachrichtigungsvorrichtung (100, 100a) nach Anspruch 1 oder 2,
wobei die Geräuschinformation Geräuschinformation ist, in der Geräusche, die von den mehreren Positionen abgegeben werden, die von dem Aufzeichnungspunkt entfernt sind und unterschiedliche Abstände in der linken und rechten Richtung, einer Vorwärtsrichtung und einer Höhenrichtung haben, für jede der mehreren vom Aufzeichnungspunkt entfernten Positionen in dem Aufzeichnungsraum vorab aufgezeichnet werden, und die aufgezeichneten Geräusche relativen Positionsbeziehungen zwischen dem Aufzeichnungspunkt und den mehreren vom Aufzeichnungspunkt entfernten Positionen, zugeordnet werden,
wobei der Selektor (308) mehrere Stücke der der Relativposition zugeordneten Geräuschinformation auswählt, und
wobei der Generator (30) die Geräusche der mehreren vom Selektor (308) gewählten Stücke der Geräuschinformation sequentiell erzeugt, so dass Lautstärken der Geräusche mit einer Position, einer Richtung oder einem Abstand variieren.

5. Die Benachrichtigungsvorrichtung (100, 100a) nach Anspruch 1 oder 2,
wobei die Geräuschinformation Geräuschinformation ist, in der Geräusche, die von den mehreren vom Aufzeichnungspunkt entfernten Positionen abgegeben werden, für jede der mehreren von dem Aufzeichnungspunkt entfernten Positionen in dem Aufzeichnungsraum und für jedes Material des körperlichen Objekts vorab aufgezeichnet werden, und die aufgezeichneten Geräusche relativen Positionsbeziehungen zwischen dem Aufzeichnungspunkt und den mehreren vom Aufzeichnungspunkt entfernten Positionen zugeordnet werden,
wobei der Selektor (308) mehrere Stücke der Geräuschinformation auswählt, die dem Material des körperlichen Objekts und der Relativposition zugeordnet sind, und
wobei der Generator (30) die Geräusche der mehreren vom Selektor (308) gewählten Stücke der Geräuschinformation sequentiell erzeugt.

6. Die Benachrichtigungsvorrichtung (100, 100a) nach Anspruch 1 oder 2,
wobei die Geräuschinformation Geräuschinformation ist, in der Geräusche, die von den mehreren Positionen abgegeben, die von dem Aufzeichnungspunkt entfernt sind und die unterschiedliche Abstände in der linken und rechten Richtung, einer Vorwärtsrichtung und einer Höhenrichtung haben, für jede der mehreren vom Aufzeichnungspunkt entfernten Positionen in dem Aufzeichnungsraum und für jedes Material des körperlichen Objekts vorab aufgezeichnet werden, und die aufgezeichneten Geräusche mit relativen Positionsbeziehungen zwischen dem Aufzeichnungspunkt und den mehreren vom Aufzeichnungspunkt entfernten Positionen zugeordnet werden,
wobei der Selektor (308) mehrere Stücke der Geräuschinformation auswählt, die dem Material des körperlichen Objekts und der Relativposition zugeordnet sind, und
wobei der Generator (30) die Geräusche der mehreren vom Selektor (308) gewählten Stücke der Geräuschinformation sequentiell erzeugt, so dass Lautstärken der Geräusche mit einer Position, einer Richtung oder einem Abstand variieren, und die sich bewegende Person von Information über die Position, die Richtung und den Abstand des körperlichen Objekts und das Material des vom Detektor (20) detektierten körperlichen Objekts benachrichtigt wird.

7. Die Benachrichtigungsvorrichtung (100, 100a) nach einem der Ansprüche 3 bis 6,
wobei der Selektor (308) mehrere Stücke der Geräuschinformation, die eine Kontinuität des körperlichen Objekts repräsentieren, auswählt.

8. Die Benachrichtigungsvorrichtung (100, 100a) nach Anspruch 7,
wobei der Selektor (308) mehrere Stücke der Geräuschinformation auswählt, die eine Kontinuität eines Rands des körperlichen Objekts repräsentieren.

9. Die Benachrichtigungsvorrichtung (100, 100a) nach einem der Ansprüche 1 bis 8,
wobei die vorab aufgezeichneten Geräusche in dem Aufzeichnungsraum abgegeben worden sind, indem sie auf das körperliche Objekt an jeder der mehreren vom Aufzeichnungspunkt entfernten Positionen in vorbestimmten Intervallen auftreffen.

10. Die Benachrichtigungsvorrichtung (100, 100a) nach Anspruch 9,
wobei die vorab aufgezeichneten Geräusche in dem Aufzeichnungsraum an jeder der mehreren vom Aufzeichnungspunkt entfernten Positionen mit der gleichen Lautstärke abgegeben worden sind.

11. Die Benachrichtigungsvorrichtung (100, 100a) nach einem der Ansprüche 1 bis 10,
wobei eine Position des Aufzeichnungspunkts in einer horizontalen Richtung eine Mitte eines Rands des Aufzeichnungsraums ist, und
wobei eine Position des Aufzeichnungspunkts in einer vertikalen Richtung eine Höhe ist, an der die sich bewegende Person das vom Generator (30) erzeugte Geräusch hört.

12. Die Benachrichtigungsvorrichtung (100, 100a) nach Anspruch 11,
wobei eine Reichweite der vorab aufgezeichneten Geräusche in dem Aufzeichnungsraum in der horizontalen Richtung eine Reichweite ist, die sich vor die sich bewegende Person erstreckt, wenn ein Abstand von der sich bewegenden Person zunimmt, und
wobei eine Reichweite der vorab aufgezeichneten Geräusche in der vertikalen Richtung eine Reichweite einer Höhe ist, die durch Addieren einer vorbestimmten Höhe vom Fuß der sich bewegenden Person zu der Höhe erhalten wird, an der das Geräusch gehört wird.

13. Benachrichtigungsverfahren, welches einen Computer einer Benachrichtigungsvorrichtung (100, 100a) nach Anspruch 1 veranlasst, die Schritte durchzuführen, welche aufweisen:
einen Schritt zum Veranlassen, dass ein Detektor (20) ein körperliches Objekt detektiert, das sich in der Umgebung einer sich in einem realen Raum bewegenden Person befindet;
einen Schritt zum Erfassen einer Relativposition zwischen dem Detektor (20) und dem körperlichen Objekt, für das der Detektor (20) bestimmt ist, als Basispunkt im realen Raum;
einen Schritt zum Auswählen von Geräuschinformation, die der Relativposition zugeordnet ist, aus in einem Speicher (200, 200a) gespeicherter Gerauschinformation, auf der Basis einer relativen Positionsbeziehung innerhalb eines vorbestimmten Aufzeichnungsraums, der der erfassten Relativposition im realen Raum zugeordnet ist, wobei der Aufzeichnungsraum zum Aufzeichnen von Geräuschen dient, die zur Benachrichtigung der sich bewegenden Person zu verwenden sind, wobei der Speicher (200, 200a) die Geräuschinformation speichert, in der Geräusche, die von den mehreren von einem vorbestimmten Aufzeichnungspunkt entfernten Positionen innerhalb des Aufzeichnungsraums abgegeben worden sind, wenn die Geräusche aufgezeichnet werden, für jede der mehreren vom Aufzeichnungspunkt entfernten Positionen vorab aufgezeichnet werden, und die aufgezeichneten Geräusche relativen Positionsbeziehungen zwischen dem Aufzeichnungspunkt und den mehreren vom Aufzeichnungspunkt entfernten Positionen zugeordnet werden; und
einen Schritt zum Veranlassen, dass ein Generator (30) die Geräusche der gewählten Geräuschinformation erzeugt und die sich im realen Raum bewegende Person von Information über das detektierte körperliche Objekt benachrichtigt.

14. Programm, zum Veranlassen, dass ein Computer eine Benachrichtigungsvorrichtung (100, 100a) nach Anspruch 1 die folgenden Schritte auszuführt:
einen Schritt zum Veranlassen, dass ein Detektor (20) ein körperliches Objekt detektiert, das sich in der Umgebung einer sich in einem realen Raum bewegenden Person befindet;
einen Schritt zum Erfassen einer Relativposition zwischen dem Detektor (20) und dem körperlichen Objekt, für das der Detektor (20) bestimmt ist, als Basispunkt im realen Raum;
einen Schritt zum Auswählen von Geräuschinformation, die der Relativposition zugeordnet ist, aus in einem Speicher (200, 200a) gespeicherter Gerauschinformation, auf der Basis einer relativen Positionsbeziehung innerhalb eines vorbestimmten Aufzeichnungsraums, der der erfassten Relativposition im realen Raum zugeordnet ist, wobei der Aufzeichnungsraum zum Aufzeichnen von Geräuschen dient, die zur Benachrichtigung der sich bewegenden Person zu verwenden sind, wobei der Speicher (200, 200a) die Geräuschinformation speichert, in der Geräusche, die von den mehreren von einem vorbestimmten Aufzeichnungspunkt entfernten Positionen innerhalb des Aufzeichnungsraums abgegeben worden sind, wenn die Geräusche aufgezeichnet werden, für jede der mehreren vom Aufzeichnungspunkt entfernten Positionen vorab aufgezeichnet werden, und die aufgezeichneten Geräusche relativen Positionsbeziehungen zwischen dem Aufzeichnungspunkt und den mehreren vom Aufzeichnungspunkt entfernten Positionen zugeordnet werden; und
einen Schritt zum Veranlassen, dass ein Generator (30) die Geräusche der gewählten Geräuschinformation erzeugt und die sich im realen Raum bewegende Person von Information über das detektierte körperliche Objekt benachrichtigt.

## Revendications

1. Un dispositif de notification (100, 100a) pour le guidage d'une personne comprenant :
un détecteur (20) configuré pour détecter un objet physique présent autour de la personne en mouvement dans un espace réel ;
un acquéreur de position relative (302, 304) configuré pour acquérir une position relative entre le détecteur (20) et l'objet physique pour lequel le détecteur (20) est désigné comme point de base dans l'espace réel ;
une mémoire (200, 200a) stockant des informations sonores dans lesquelles des sons, qui ont été émis à partir d'une pluralité de positions éloignées d'un point d'enregistrement prédéterminé dans un espace d'enregistrement prédéterminé lors de l'enregistrement des sons, sont préenregistrés pour chacune de la pluralité de positions éloignées du point d'enregistrement, l'espace d'enregistrement étant destiné à l'enregistrement de sons à utiliser pour la notification à la personne en mouvement, et les sons enregistrés sont associés à des relations de position relative entre le point d'enregistrement et la pluralité de positions éloignées du point d'enregistrement ;
un sélecteur (308) configuré pour sélectionner l'information sonore associée à la position relative parmi les informations sonores stockées dans la mémoire (200, 200a) sur la base de la relation de position relative dans l'espace d'enregistrement associée à la position relative dans l'espace réel acquise par l'acquéreur de position relative (302, 304) ; et
un générateur (30) configuré pour générer les sons de l'information sonore sélectionnée par le sélecteur (308) afin de notifier, dans l'espace réel, à la personne en mouvement l'information concernant l'objet physique détecté par le détecteur (20).

2. Le dispositif de notification (100, 100a) selon la revendication 1,
dans lequel le dispositif de notification (100, 100a) est porté par la personne en mouvement.

3. Le dispositif de notification (100, 100a) selon la revendication 1 ou 2,
dans lequel le sélecteur (308) sélectionne une pluralité d'informations sonores associées à la position relative, et
dans lequel le générateur (30) génère séquentiellement les sons de la pluralité d'informations sonores sélectionnées par le sélecteur (308).

4. Le dispositif de notification (100, 100a) selon la revendication 1 ou 2,
dans lequel les informations sonores sont des informations sonores dans lesquelles les sons émis à partir de la pluralité de positions, qui sont éloignées du point d'enregistrement et ont des distances différentes dans les directions gauche et droite, une direction vers l'avant, et une direction de hauteur, sont préenregistrés pour chacune de la pluralité de positions éloignées du point d'enregistrement dans l'espace d'enregistrement et les sons enregistrés sont associés à des relations de position relatives entre le point d'enregistrement et la pluralité de positions éloignées du point d'enregistrement,
dans lequel le sélecteur (308) sélectionne une pluralité d'informations sonores associées à la position relative, et
dans lequel le générateur (30) génère séquentiellement les sons de la pluralité d'informations sonores sélectionnés par le sélecteur (308) de sorte que les volumes des sons varient en fonction d'une position, d'une direction ou d'une distance.

5. Le dispositif de notification (100, 100a) selon la revendication 1 ou 2,
dans lequel les informations sonores sont des informations sonores dans lesquelles les sons émis à partir de la pluralité de positions éloignées du point d'enregistrement sont préenregistrés pour chacune de la pluralité de positions éloignées du point d'enregistrement dans l'espace d'enregistrement et pour chaque matériau de l'objet physique et les sons enregistrés sont associés à des relations de position relatives entre le point d'enregistrement et la pluralité de positions éloignées du point d'enregistrement,
dans lequel le sélecteur (308) sélectionne une pluralité d'informations sonores associées au matériau de l'objet physique et à la position relative, et
dans lequel le générateur (30) génère séquentiellement les sons de la pluralité d'informations sonores sélectionnées par le sélecteur (308).

6. Le dispositif de notification (100, 100a) selon la revendication 1 ou 2,
dans lequel les informations sonores sont des informations sonores dans lesquelles les sons émis à partir de la pluralité de positions, qui sont éloignées du point d'enregistrement et ont des distances différentes dans les directions gauche et droite, une direction vers l'avant et une direction de hauteur, sont préenregistrés pour chacune de la pluralité de positions éloignées du point d'enregistrement dans l'espace d'enregistrement et pour chaque matériau de l'objet physique et les sons enregistrés sont associés à des relations de position relative entre le point d'enregistrement et la pluralité de positions éloignées du point d'enregistrement, dans lequel le sélecteur (308) sélectionne une pluralité d'informations sonores associées au matériau de l'objet physique et à la position relative, et
dans lequel le générateur (30) génère séquentiellement les sons de la pluralité d'informations sonores sélectionnées par le sélecteur (308) de sorte que les volumes des sons varient en fonction d'une position, d'une direction ou d'une distance, et pour notifier à la personne en mouvement les informations relatives à la position, à la direction et à la distance de l'objet physique et du matériau de l'objet physique détectées par le détecteur (20).

7. Le dispositif de notification (100, 100a) selon l'une des revendications 3 à 6, dans lequel le sélecteur (308) sélectionne une pluralité d'informations sonores représentant la continuité de l'objet physique.

8. Le dispositif de notification (100, 100a) selon la revendication 7,
dans lequel le sélecteur (308) sélectionne une pluralité d'informations sonores représentant la continuité d'un bord de l'objet physique.

9. Le dispositif de notification (100, 100a) selon l'une des revendications 1 à 8,
dans lequel les sons préenregistrés dans l'espace d'enregistrement ont été émis en frappant l'objet physique à chacune de la pluralité de positions éloignées du point d'enregistrement à des intervalles prédéterminés.

10. Le dispositif de notification (100, 100a) selon la revendication 9,
dans lequel les sons préenregistrés dans l'espace d'enregistrement ont été émis avec le même volume à chacune de la pluralité de positions éloignées du point d'enregistrement.

11. Le dispositif de notification (100, 100a) selon l'une des revendications 1 à 10,
dans lequel une position du point d'enregistrement dans une direction horizontale est un centre d'un bord de l'espace d'enregistrement, et
dans lequel une position du point d'enregistrement dans une direction verticale est une hauteur à laquelle la personne en mouvement entend le son généré par le générateur (30).

12. Le dispositif de notification (100, 100a) selon la revendication 11,
dans lequel une gamme de sons préenregistrés dans l'espace d'enregistrement dans la direction horizontale est une gamme qui s'étend devant la personne en mouvement à mesure qu'une distance de la personne en mouvement augmente, et
dans lequel une gamme de sons préenregistrés dans la direction verticale est une gamme d'une hauteur obtenue en ajoutant une hauteur prédéterminée à la hauteur à laquelle le son est entendu à partir des pieds de la personne en mouvement.

13. Un procédé de notification qui amène un ordinateur d'un dispositif de notification (100, 100a) selon la revendication 1 à exécuter des étapes comprenant :
une étape consistant à faire en sorte qu'un détecteur (20) détecte un objet physique se présentant autour d'une personne en mouvement dans un espace réel ;
une étape d'acquisition d'une position relative entre le détecteur (20) et l'objet physique pour lequel le détecteur (20) est désigné comme point de base dans l'espace réel ;
une étape de sélection des informations sonores associées à la position relative à partir des informations sonores stockées dans une mémoire (200, 200a) sur la base d'une relation de position relative dans un espace d'enregistrement prédéterminé associé à la position relative acquise dans l'espace réel, l'espace d'enregistrement étant destiné à l'enregistrement de sons à utiliser pour la notification à la personne en mouvement, dans laquelle la mémoire (200, 200a) stocke les informations sonores dans lesquelles les sons, qui ont été émis à partir d'une pluralité de positions éloignées d'un point d'enregistrement prédéterminé dans l'espace d'enregistrement lors de l'enregistrement des sons, sont préenregistrés pour chacune de la pluralité de positions éloignées du point d'enregistrement, et les sons enregistrés sont associés à des relations de position relative entre le point d'enregistrement et la pluralité de positions éloignées du point d'enregistrement ; et
une étape consistant à faire en sorte qu'un générateur (30) génère les sons de l'information sonore sélectionnée et notifie, dans l'espace réel, à la personne en mouvement l'information relative à l'objet physique détecté.

14. Un programme pour amener un ordinateur d'un dispositif de notification (100, 100a) selon la revendication 1 à exécuter les étapes suivantes :
une étape consistant à faire en sorte qu'un détecteur (20) détecte un objet physique se présentant autour d'une personne en mouvement dans un espace réel ;
une étape d'acquisition d'une position relative entre le détecteur (20) et l'objet physique pour lequel le détecteur (20) est désigné comme point de base dans l'espace réel ;
une étape de sélection des informations sonores associées à la position relative à partir des informations sonores stockées dans une mémoire (200, 200a) sur la base d'une relation de position relative dans un espace d'enregistrement prédéterminé associé à la position relative acquise dans l'espace réel, l'espace d'enregistrement étant destiné à l'enregistrement de sons à utiliser pour la notification à la personne en mouvement, dans laquelle la mémoire (200, 200a) stocke les informations sonores dans lesquelles les sons, qui ont été émis à partir d'une pluralité de positions éloignées d'un point d'enregistrement prédéterminé dans l'espace d'enregistrement lors de l'enregistrement des sons, sont préenregistrés pour chacune de la pluralité de positions éloignées du point d'enregistrement, et les sons enregistrés sont associés à des relations de position relative entre le point d'enregistrement et la pluralité de positions éloignées du point d'enregistrement ; et
une étape consistant à faire en sorte qu'un générateur (30) produise les sons de l'information sonore sélectionnée et notifie, dans l'espace réel, à la personne en mouvement l'information relative à l'objet physique détecté.
